(19) **Europäisches Patentamt European Patent Office Office européen des brevets**

(11) **EP 1 576 387 B1**

(12) **FASCICULE DE BREVET EUROPEEN**

(45) Date de publication et mention de la délivrance du brevet:
**08.02.2017 Bulletin 2017/06**

(51) Int Cl.:
***G01S 5/14*** (2006.01)

(21) Numéro de dépôt: **03809988.3**

(22) Date de dépôt: **16.12.2003**

(86) Numéro de dépôt international:
**PCT/FR2003/050176**

(87) Numéro de publication internationale:
**WO 2004/057364 (08.07.2004 Gazette 2004/28)**

(54) **PROCEDE ET SYSTEME DE NAVIGATION EN TEMPS REEL A L'AIDE DE SIGNAUX RADIOELECTRIQUES A TROIS PORTEUSES EMIS PAR DES SATELLITES ET DE CORRECTIONS IONOSPHERIQUES**

ECHTZEIT ORTUNGSVERFAHREN UND SYSTEM UNTER VERWENDUNG VON SATELLITENSIGNALEN MIT DREI TRÄGERFREQUENZEN UND IONOSPHÄRISCHEN KORREKTUREN

METHOD AND SYSTEM FOR REAL TIME NAVIGATION USING SATELLITE TRANSMITTED THREE-CARRIER RADIO SIGNALS AND IONOSPHERIC CORRECTIONS

(84) Etats contractants désignés:
**AT BE BG CH CY CZ DE DK EE ES FI FR GB GR HU IE IT LI LU MC NL PT RO SE SI SK TR**

(30) Priorité: **19.12.2002 FR 0216227**

(43) Date de publication de la demande:
**21.09.2005 Bulletin 2005/38**

(73) Titulaire: **Organisation Intergouvernementale Dite Agence Spatiale Europeenne**
75738 Paris Cedex 15 (FR)

(72) Inventeurs:
• **HERNANDEZ-PAJARES, Manuel**
E-08940 BARCELONE (ES)
• **JUAN-ZORNOZA, José Miguel**
E-08041 BARCELONE (ES)
• **SANZ-SUBIRANA, Jaume**
E-08015 BARCELONE (ES)
• **GARCIA-RODRIGUEZ, Alberto**
2157 BA Abbenes (NL)

(74) Mandataire: **Ipside**
29, rue de Lisbonne
75008 Paris (FR)

(56) Documents cités:
**US-A- 5 805 108     US-B1- 6 356 232**

• **HERNANDEZ-PAJARES M ET AL: "Impact of real-time ionospheric determination on improving precise navigation with GALILEO and next-generation GPS" PROCEEDINGS ION GPS-2002, septembre 2002 (2002-09), XP001173132 Portland, Oregon, USA**
• **VOLLATH U ET AL: "Analysis of three-carrier ambiguity resolution technique for precise relative positioning in GNSS-2" NAVIGATION. JOURNAL OF THE INSTITUTE OF NAVIGATION, SPRING 1999, INST. NAVIGATION, USA, vol. 46, no. 1, avril 1999 (1999-04), pages 13-23, XP008024320 ISSN: 0028-1522 cité dans la demande**
• **JUNG J, ENGE P, PERVAN B: "Optimization of Cascade Integer Resolution with Three Civil GPS Frequencies" INSTITUTE OF NAVIGATION, GPS 2000 CONFERENCE, 19 septembre 2000 (2000-09-19), - 22 septembre 2000 (2000-09-22) XP008024327 SALT LAKE CITY, UT cité dans la demande**
• **HERNANDEZ-PAJARES M, JUAN JM, SANZ J, COLOMBO OL: "Tomographic modeling of GNSS ionospheric corrections: Assessment and real-time applications" PROCEEDINGS OF THE ION GPS-2001, septembre 2001 (2001-09), pages 616-625, XP008024325 Salt lake City, Utah cité dans la demande**

EP 1 576 387 B1

- **HERNANDEZ-PAJARES M ET AL: "Improving the real-time ionospheric determination from GPS sites at very long distances over the equator" JOURNAL OF GEOPHYSICAL RESEARCH, 1 OCT. 2002, AMERICAN GEOPHYS. UNION, USA, vol. 107, no. A10, octobre 2002 (2002-10), pages SIA10-1-10, XP008024333 ISSN: 0148-0227 cité dans la demande**

**EP 1 576 387 B1**

**Description**

L'invention concerne un procédé et un système de navigation en temps réel à l'aide de signaux radioélectriques à trois porteuses émis par des satellites et de corrections ionosphériques, plus précisément de corrections obtenues à l'aide d'un modèle ionosphérique en temps réel, continûment mis à jour, le modèle étant basé sur des données d'un système de navigation par satellite, par exemple implémenté comme un modèle de voxels en trois dimensions.

Elle trouve une application particulière, bien que non exhaustive, dans le domaine de la navigation instantanée très précise, typiquement avec une précision inférieure au décimètre comme il le sera montré ci-après, ce sur des distances de l'ordre de la centaines de kilomètres ou plus.

Pour fixer les idées, on se placera dans ce qui suit dans ce cas de l'application préférée de l'invention, sans en limiter en quoi que ce soit sa portée.

Une des techniques actuellement couramment utilisées pour obtenir un positionnement précis d'un "objet", fixe ou mobile, et, dans le dernier cas, des données relatives à sa position, son déplacement, la direction de ce déplacement, et/ou sa vitesse, est d'utiliser des signaux radioélectriques émis par des satellites artificiels tournant autour de la terre. Le terme "objet" doit être compris dans son sens le plus général, notamment un véhicule terrestre, maritime ou aérien. Pour simplifier, on appellera "nomade" cet "objet" dans ce qui suit.

Diverses techniques sont connues pour obtenir le positionnement précité. Elles sont notamment basées sur la connaissance de la position instantanée de plusieurs satellites dans l'espace (ou constellation de satellites, ces satellites pouvant être géostationnaires ou non) et de la vitesse de propagation des ondes radioélectriques. Des horloges très précises sont embarquées à bord des satellites et les signaux émis comprennent des informations horodatées, ce qui permet de connaître précisément également l'instant d'émission et de réception. Il est alors possible de déterminer la distance théorique séparant un satellite en vue du nomade à un instant donné de celui-ci, connaissant la vitesse de propagation des ondes et le temps mis pour atteindre le nomade. Si des satellites en nombre suffisant sont observables, on peut déterminer ainsi les cordonnées du nomade par rapport à un référentiel, en deux dimensions (longitude et latitude sur le globe terrestre), voire en trois dimensions (longitude, latitude et altitude : verticale).

Cependant, comme il va l'être montré, du fait d'accumulation d'erreurs dans les mesures dues à diverses causes, les distances calculées ne sont qu'approximatives et la détermination de la position du nomade souffre d'une imprécision plus ou moins importante, selon les technologies mises en oeuvre.

Un des systèmes de navigation par satellite les plus connu est le système dit "GPS" pour "Global Positionning system" ou "Système de Positionnement Mondial".

Classiquement, les satellites "GPS" (ou d'un type semblable) émettent sur deux bandes de fréquences, généralement désignés $L_1$ (fréquence de porteuse égale à 1,575 GHz) et $L_2$ (fréquence de porteuse égale à 1,227 GHz), d'où la qualification de "double fréquence" ou "dual-frequency" qui leur est appliquée.

L'utilisation de ces deux fréquences, conformément à certains procédés bien connus de l'Homme de Métier, permet d'améliorer la précision de la détermination de la position d'un nomade par rapport à un référentiel, mais nécessite des récepteurs "GPS" plus complexes et plus onéreux.

Une détermination de position peut être faite, selon deux méthodes principales : en temps réel ou en temps différé, en effectuant ce qui est appelé un "post-traitement". Dans le premier cas, on parle également de résolution "single-epoch" selon la terminologie anglo-saxonne la plus couramment utilisée (terme qui sera utilisé ci-après) ou de résolution instantanée, les calculs étant effectués lors d'une seule "époque" d'observation. La seconde méthode ("post-traitement") permet d'améliorer la précision. Cependant, si pour des nomades se déplaçant lentement (un navire par exemple), cette dernière méthode ne présente pas d'inconvénients majeurs, elle n'est pas appropriée pour des nomades se déplaçant très rapidement (aéronefs par exemple).

On peut encore améliorer la précision, en combinant les signaux émis par les satellites avec des signaux en provenance de stations terrestres fixes de référence, dont les positions sont parfaitement connues. Cependant, il est nécessaire, si le nomade parcourt de grandes distances, que le réseau de ces stations soit relativement dense, toujours dans le cas où une grande précision dans la détermination de la position du nomade est souhaitable, ce qui augmente corrélativement le coût du système global.

En outre, parmi les causes importantes d'erreurs, la réfraction différentielle ionosphérique, si on considère des distances égales à des dizaines de kilomètres ou plus, est un des problèmes principaux affectant les capacités de résolution instantanée d'ambiguïté de phase de porteuse, et par conséquent la possibilité de fournir une navigation dont la précision est de l'ordre du centimètre avec les systèmes satellites de navigation mondiale à double fréquence tels que le système "GPS" précité. Cette caractéristique restera vraie en ce qui concerne les futurs systèmes mettant en oeuvre trois fréquences, comme le système "GALILEO" et le système "GPS" modernisé.

En effet, les systèmes de navigation satellites à trois porteuses en cours de planification offrent les avantages potentiels d'un taux élevé de réussite de la résolution instantanée d'ambiguïté et d'intégrité dans celle-ci, avec une quantité de calculs géodésiques minimale. Ceci est dû notamment au fait que l'on dispose simultanément d'un nombre plus important de données distinctes (c'est-à-dire associées aux trois fréquences précitées), ce qui améliore corrélativement les chances d'obtenir une résolution d'ambiguïté instantanée ("single-epoch").

Mais, de nouveau, cette résolution peut être sérieusement affectée par la réfraction ionosphérique, comme détaillé ci-après.

Pour atteindre des précisions élevées dans la détermination instantanée de la position d'un nomade, notamment d'un nomade se déplaçant sur de grandes distances, le besoin continue donc à se faire sentir de mettre en oeuvre des techniques permettant, notamment, de réduire l'influence néfaste de la réfraction ionosphérique.

Dans l'état de la technique, des procédés visant à répondre à ce besoin ont été proposés.

On peut citer notamment le procédé, dit "TCAR", de "résolution d'ambiguïté à trois porteuses". Ce procédé est décrit dans l'article intitulé : "ANALYSIS OF THREE-CARRIER AMBIGUITY RESOLUTION (TCAR) TECHNIQUE FOR PRECISE RELATIVE POSITIONNING IN GNSS-2", de U. VOLLATH et al., paru dans "Proceedings of the ION-GPS", 1998, IX-O-13, pages 1-6.

On peut également citer le procédé, dit "CIR", de "résolution de nombres entiers en cascade". Ce procédé est décrit dans l'article de Jaewo JUNG et al., intitulé "Optimization of Cascade Integer Resolutionwith three Civil GPS Frequencies", paru dans "Procedings of the ION-GPS" 2000.

Ces deux techniques partagent une approche de base semblable : les ambiguïtés de double différence de nombres entiers sont successivement résolues en calculant des battements de fréquences d'ondes. Ce calcul est effectué en partant du battement de la longueur d'onde la plus élevée à la plus courte, incluant des combinaisons de phases de porteuse de chemins dits "extra long" et "long" (avec des longueurs d'onde de 7,480 m et de 0,862 m, respectivement), et une première porteuse à la "fréquence $L_1$" (avec une longueur d'onde de 0,190 m).

En particulier, le procédé "TCAR" constitue une approche simple qui essaie de résoudre instantanément ("single-epoch") l'ensemble complet des ambiguïtés. Mais les performances de "TCAR" sont fortement affectées par le décorrélation ionosphérique de réfraction qui se produit avec la distance. En effet, comme détaillé ci-après, le retard d'ionosphère est un problème quand (comme d'ailleurs dans le cas des systèmes à deux fréquences) la valeur de sa double différentielle est supérieure à 0,26 TECU (ce qui correspond à 4 cm de retard pour $L_1$).

"TECU" est une unité utilisée pour décrire certaines caractéristiques électriques de l'ionosphère. En effet, l'ionosphère peut être décrite à l'aide d'une carte représentant un compte de nombre total d'électrons, ou "TEC" (pour "Total Electron Content"). La carte représente l'intégration du nombre d'électrons suivant une direction verticale comme une fonction de la latitude et de la longitude. L'unité de "TEC" est appelée "TECU" (pour "TEC's Units"), avec 1 TECU = $10^{16}$ électrons contenus dans un cylindre aligné sur la ligne d'observation d'un satellite observé, dont la section est de 1 $m^2$. Les particules chargées de l'ionosphère sont générées par le soleil, dont l'intensité du rayonnement varie naturellement en fonction de l'heure considérée. Du fait que la terre tourne autour de son axe, sous la couche ionosphérique, la carte "TEC" est habituellement considérée comme représentant une référence fixe par rapport au soleil, mais changeante en fonction de l'heure.

Le seuil rappelé ci-dessus peut être facilement dépassé comme il est possible de le constater en consultant des cartes ionosphériques ("TEC") de retards verticaux calculés à partir des données "GPS". De telles cartes sont éditées, à titre d'exemple par le "Jet Propulsion Laboratory", l'université de Berne, etc., et publiées sur Internet par l' "University Corporation for Atmosphéric Research" et d'autres organismes semblables.

En conséquence, en vue d'améliorer encore le procédé "TCAR", une approche intégrée dite "ITCAR" (pour "Integrated TCAR") a été développée. Cette technique est décrite, par exemple, dans l'article de VOLLAT et al. précité.

Cette technique recourt à des algorithmes de recherche et à un filtre de navigation dans lesquels les ambiguïtés font partie des signaux de sortie et les erreurs résiduelles ionosphériques sont grossièrement estimées. Pour une description plus détaillée des techniques mises en oeuvre, on se reportera avec profit à cet article.

Cependant, bien qu'apportant une amélioration significative, la technique "ITCAR" reste néanmoins affectée par le manque de connaissance de la double différence de réfraction ionosphérique, limitant ainsi le taux de réussite de la résolution d'ambiguïté pour des distances supérieures à quelques dizaines de kilomètre, comme décrit dans l'article de VOLLATH et al., intitulé : " Ambiguity Resolution using Three Carriers - Performance Analysing using "Real" Data", paru dans "GNSS Symposium", Seville, mai 2001.

Il a également été proposé, toujours dans le but d'améliorer la précision de la détermination de la position d'un nomade par rapport à un référentiel, de combiner un modèle ionosphérique en temps réel de l'ionosphère, obtenu à partir de données de deux fréquences ("dual-frequency") générées par un réseau de stations fixes, avec des données d'un programme géodésique, et d'utiliser de telles données pour effectuer des corrections ionosphériques. Ce procédé a été utilisé avec un certain succès pour résoudre des ambiguïtés en temps réel dans les systèmes à deux fréquences du type "GPS".

Un tel procédé de ce type, dit "WARTK" (pour "Wide Area Real-Time Kinematics" ou cinématique en temps réel sur de larges étendues), est par exemple décrit dans l'article Hernández-Pajares et al., intitulé "Tomographic modeling of GNSS ionospheric corrections : Assesment and real-time applications", paru dans "ION GPS", 19-22 septembre 2000, pages 616-625. Ce procédé permet, certes, d'atténuer les effets néfastes des perturbations subies par les ondes radioélectriques se propageant dans l'ionosphère et, par conséquent, d'améliorer très sensiblement le taux de réussite de la résolution d'ambiguïté de phase et la précision de la détermination de la position d'un nomade par rapport à un référentiel, mais il nécessite une quantité de calculs importante pour établir le modèle précité en temps réel et déterminer, également en temps réel, les corrections ionosphériques à apporter aux mesures de distances.

L'invention vise à pallier les inconvénients des procédés et systèmes de l'art connu, et dont certains viennent d'être rappelés.

L'invention se fixe pour but un procédé de navigation en temps réel, très précis (détermination de la position d'un nomade typiquement meilleure que le décimètre) à l'aide de signaux radioélectriques à trois porteuses émis par des satellites et de corrections ionosphériques obtenues à partir de données d'un modèle de description ionosphérique d'une région traversée par le rayonnement radioélectrique, combiné à des données géodésiques.

Pour ce faire, selon une première caractéristique importante de l'invention, un procédé simple de résolution instantanée ("single-epoch") d'ambiguïtés de phases de trois porteuses émise par des satellites, du type "TCAR" précité est utilisé. Des corrections ionosphériques précises en temps réel, basées sur un modèle de description ionosphérique, sont générées par des stations fixes de référence. Ces corrections ionosphériques sont transmises aux utilisateurs qui les incorporent à "TCAR".

L'invention présente des avantages importants.

Les dispositions, propres à l'invention, permettent d'obtenir de meilleures performances que le procédé "ITCAR" sur de longues distances, à une position très éloignée de la station de référence le plus proche. Le procédé selon l'invention permet typiquement la résolution instantanée de plus de 90 % des ambiguïtés à plus de 100 kilomètres de cette station et pratiquement de 100 % pour un éloignement de l'ordre de 60 km, ce dans un scénario de fonctionnement peu favorable : valeurs ionosphériques basses et conditions d'ensoleillement maximum. Les procédés de l'art connu mettant en oeuvre trois fréquences permettent seulement, dans des conditions comparables, un taux de succès typiquement de l'ordre de 60 %.

On conçoit aisément que cette dernière caractéristique soit très intéressante, car elle ne nécessite pas la mise en place d'un réseau de stations terrestres fixes de référence très dense (stations éloignées les unes des autres de l'ordre de la centaine de kilomètres). Il s'ensuit un gain global très important : dans le cas de l'Europe, par exemple, pour couvrir ce continent, il est possible d'économiser 99 % de stations de référence par rapport à un réseau dont les stations de référence seraient seulement éloignées d'une distance de l'ordre d'une dizaine de kilomètres les unes des autres, tout en conservant une même précision dans la détermination de la position d'un nomade que celle obtenue par les procédés de l'art connu. C'est en effet cette densité d'implantation qui serait nécessaire pour obtenir une précision de navigation meilleure que le décimètre, visée par le procédé de l'invention, dans son application préférée. Enfin, le réseau de stations terrestres fixes de référence nécessaire au procédé de l'invention est très similaire au réseau en cours d'implantation pour le système européen de navigation par satellites connu sous l'abréviation "EGNOS GNSS" (pour "European Geostationary Navigation Overlay System - Global Navigation Satellite Systems"). Ce système est basé sur une constellation de satellites "IMMERSAT III", ce qui laisse penser qu'une compatibilité importante existe avec les installations déjà existantes ou en cours d'implantation.

Par ailleurs, le procédé selon l'invention reste tout à fait simple, comme le procédé "TCAR". En particulier, il n'exige qu'une quantité de calculs faible pour l'utilisateur (récepteur du nomade), comparée à "ITCAR" et également à "WARTK", procédés développés pour les systèmes de positionnement à deux fréquences, comme il a été rappelé ci-dessus.

D'autre part, le modèle de description ionosphérique en temps réel de la région traversée par le rayonnement radioélectrique émis par les satellites observés utilise seulement des données de phase de porteuse, ces données étant combinées avec des estimations géodésiques calculées dans un centre unique, qui peut être l'une des stations, dite "maître", du réseau de stations de référence.

L'invention a donc pour objet principal un Procédé de navigation en temps réel à l'aide de signaux radioélectriques à trois porteuses de première, deuxième et troisième fréquences distinctes, de valeurs croissantes en allant de ladite première à ladite troisième fréquence, pour déterminer la position d'un utilisateur, dit nomade, lesdits signaux radioélectriques étant émis par un nombre déterminé d'émetteurs embarqués dans des satellites tournant autour du globe terrestre et en vue dudit nomade, lesdits signaux étant reçus par un récepteur associé au dit nomade et un récepteur associé à au moins une station terrestre parmi une pluralité de stations terrestres fixes, dites de référence, lesdits signaux radioélectriques traversant une couche de l'atmosphère dite ionosphérique entourant ledit globe terrestre et y subissant des perturbations engendrant des ambiguïtés de phases desdites porteuses, caractérisé en ce qu'il comprend au moins les étapes suivantes :

-   une première étape consistant en la détermination, dans ledit nomade, de l'ambiguïté de différence de phases entre lesdites troisième et deuxième porteuses, dite de "chemin extra-long", à partir d'une combinaison de pseudo-distances utilisant une valeur de code unique ;
-   une deuxième étape consistant en l'estimation, dans ledit nomade, de l'ambiguïté de différence de phases entre lesdites première et deuxième porteuses, dite de "chemin long", à partir de ladite ambiguïté de "chemin extra-long" déterminée lors de ladite première étape ;

- une troisième étape consistant, dans ledit nomade, en la résolution de l'ambiguïté d'une desdites fréquence, à partir de ladite ambiguïté de "chemin long" estimée lors de ladite deuxième étape ; et
une étape supplémentaire l'application de corrections ionosphériques en temps réel pendant ladite troisième étape, lesdites corrections ionosphériques étant basées sur un modèle ionosphérique en temps réel de ladite couche continûment mis à jour.

L'invention a encore pour objet un système de navigation par satellite mettant en oeuvre ce procédé.

L'invention va maintenant être décrite de façon plus détaillée en se référant aux dessins annexés, parmi lesquels :

- la figure 1A illustre schématiquement une coupe partielle du globe terrestre, de la couche ionosphérique l'entourant, découpée en voxels, ainsi que des faisceaux radioélectriques générés par des émetteurs "GPS" de trois satellites de communication et trois stations terrestres recevant ces signaux ;
- la figure 1B illustre, de façon schématique, l'architecture d'un système de navigation complet, pour la mise en oeuvre du procédé de l'invention, vue du côté d'un récepteur "GPS" d'un nomade ;
- la figure 2 représente schématiquement la ligne de base et les positions d'une station terrestre de référence et d'un nomade, par rapport à des axes de coordonnées ;
- la figure 3 est un agrandissement (zoom) de la figure 2 montrant la trajectoire du nomade, par rapport à ces mêmes axes de coordonnées ;
- la figure 4 est un graphique illustrant des exemples de retards estimés d'un modèle ionosphérique en temps réel selon l'invention comparés à des retards ionosphériques réels ;
- la figure 5 est un graphique illustrant des exemples de double différence de "Contenu Total d'Electrons Obliques" ("STEC"), estimée en temps réel avec un modèle de description de l'ionosphère, comparé à des valeurs vraies ;
- la figure 6 est un graphique illustrant des exemples d'erreurs dans la détermination du modèle ionosphérique en temps réel de la double différence de "STEC" comparée à deux seuils ionosphériques
- les figures 7A à 7D sont des graphiques illustrant des exemples d'erreurs (en mètres) estimés dans différents composantes de navigation ;
- les figures 8A à 8D sont des graphiques illustrant des exemples d'erreurs (en mètres) réelles dans les mêmes composantes de navigation ;
- la figure 9 est un graphique illustrant un exemple de pourcentage de réussite sur la détermination instantanée d'une double différence ionosphérique suffisante pour résoudre toutes les ambiguïtés (avec un "TECU" meilleur que 0,26) pour des corrections de temps de latence dans une gamme de 1 à 30 secondes ; et
- la figure 10 est un graphique illustrant un exemple de pourcentage de réussite sur la détermination instantanée d'une double différence ionosphérique pour des pour des corrections de temps de latence allant jusqu'à 900 secondes.

Dans ce qui suit, sans en limiter en quoi que ce soit la portée, on se placera ci-après dans le cadre de l'application préférée de l'invention, sauf mention contraire, c'est-à-dire dans le cas d'un procédé de navigation par satellite très précis, d'ondes radioélectriques à trois porteuses de fréquences distinctes émises par ces satellites et des corrections en temps réel issues d'un modèle en temps réel de description ionosphérique d'une région sondée par le rayonnement radiofréquence de satellites.

On va maintenant détailler les principales étapes du procédé selon l'invention, en faisant appel pour les illustrer à des valeurs numériques typiques. Il comprend trois étapes de base, qui sont semblables à celles du procédé "TCAR" précité et vont être explicitées ci-dessous :

Étape 1 :

Pour résoudre l'ambiguïté de "chemin" dit "extra-long" (ou "extra-wide", selon la terminologie anglo-saxonne : typiquement avec une longueur d'onde de 7,5 mètres sur un ensemble de données d'un exemple d'une expérience donnée), il est ajouté une combinaison de codes dits de "pseudo-longueurs".

Parmi les causes d'erreurs, on peut citer le phénomène connu dit de "trajets multiples". Bien que les trajets multiples de pseudo-longueurs puissent diminuer le taux de réussite, cette erreur est en général de faible amplitude comparée à la grande longueur d'onde du "chemin extra-long", et il est habituellement possible de surmonter ce problème.

En effet, la première étape typique de l'approche "TCAR" (voir par exemple l'article précité de VOLLATH et al., de 1998) est d'estimer la double différence d'ambiguïté (entre des paires de récepteurs et de satellites), que l'on appellera ci-après $\nabla\Delta N_{ew}$, de la double différence de phases de porteuse de chemin "extra-long", que l'on appellera ci-après $\nabla\Delta L_{ew}$ ($L_{ew}$ étant la longueur d'onde de la porteuse de chemin "extra-long") en utilisant une combinaison de "pseudo-distances" (ou codes) $P_{ew}$ qui partagent les mêmes valeur et signe de la dépendance ionosphérique que les combinaisons de phase. Ceci est possible compte tenu de la grande longueur d'onde résultant de la combinaison de "chemin extra-long". Les valeurs de $L_{ew}$ et $P_{ew}$ peuvent être déterminées par les relations suivantes :

$$L_{ew} = \lambda_{ew}(\phi_3 - \phi_1) = \frac{f_3 L_3 - f_1 L_1}{f_3 - f_1} = \rho^* + \lambda_{ew} b_{ew} + \alpha_{ew} I + m_{ew} + \varepsilon_{ew} + ... \qquad (1)$$

$$P_{ew} = \frac{f_3 P_3 + f_1 P_1}{f_3 + f_1} = \rho^* + \alpha_{ew} I + M_{ew} + \mathrm{E}_{ew} + ... \qquad (2);$$

relations dans lesquels $L_X$ est l'observation de phase de porteuse (en unités de longueur) à la fréquence $f_X$ et à la longueur d'onde $\lambda_x$. Les valeurs de $X$ sont portées dans le TABLEAU I annexé en fin de la présente description, étant entendu que les chiffres 1 à 3 sont associés aux trois fréquences de l'exemple décrit. Dans Le TABLEAU I sont rassemblés un certain nombre de données associées : fréquences, longueurs d'onde, erreurs de dépendance ionosphérique, de trajets multiples maximum, et d'observations diverses, utiles à la bonne compréhension du procédé selon l'invention. Ces données sont associées aux trois bandes de fréquences, $L_1$ à $L_3$, respectivement, et aux phases de porteuses des chemins "extra-longs" et longs" ($L_{ew}$ et $L_W$), respectivement. $P_X$ est l'observation correspondante de "pseudo-distance". Les erreurs de trajets multiples et d'observation pour des phases de porteuses et des "pseudo-distances" sont notées $m_X$, $M_X$, $\varepsilon_X$, $E_X$, respectivement (les valeurs maximales de trajets multiples et les erreurs de mesure typiques sont également reportées dans le tableau I). L'ambiguïté de phase de porteuse indifférenciée $\lambda_X b_X$, qui contient des retards instrumentaux et, après double différentiation, devient une valeur entière de multiplication de la longueur d'onde, $\lambda_X \nabla \Delta N_X$. Le retard ionosphérique $\alpha_X I$ est proportionel au "Contenu Total d'Electrons Obliques" ou "STEC", l'intégration de la densité d'électrons libres le long du faisceau rayonné par un satellite étant habituellement mesuré en unités TECU, comme il a été rappelé. Dans les relations (1) et (2), $\rho^*$ représente un terme qui ne dépend pas de la fréquence (distance, erreurs d'horloge, réfraction troposphérique, etc.).

A partir de la relation (2), dans laquelle des termes additionnels mineurs, tels que le l'enroulement de phase de porteuse ne sont pas explicitement représentés, il est possible d'estimer la double différence d'ambiguïté de chemin "extra-long", que l'on appellera ci-après $\nabla \Delta \hat{N}_{ew}$, sur une seule "époque" d'observation, en soustrayant le code correspondant, comme exprimé dans la relation ci-dessous :

$$\nabla \Delta \hat{N}_{ew} = \frac{1}{\lambda_{ew}} \nabla \Delta (L_{ew} - P_{ew}) = \nabla \Delta N_{ew} - \frac{1}{\lambda_{ew}} (\nabla \Delta M_{ew} + \nabla \Delta \mathrm{E}_{ew}) + ... \qquad (3) \quad;$$

Quand il n'y a pas de trajets multiples importants affectant les récepteurs (usuellement inférieurs à 3,7 mètres), la limite d'erreur d'une telle évaluation est inférieure à 0,5 cycles (comme le montrent les valeurs fournies dans le
TABLEAU I), ce qui permet de fixer instantanément l'ambiguïté à une valeur de nombre entier exacte.

Étape 2 :

L'ambiguïté de combinaison de "chemin long" est estimée à partir de la phase de porteuse non ambiguë de "chemin extra-long", obtenue lors de la première étape. La différence entre celles-ci est constituée la plupart du temps par l'ambiguïté de "chemin extra-long", et la réfraction ionosphérique différentielle (environ 0,06 cycles/TECU avec les fréquences de travail du présent exemple). Les termes non-dispersifs sont supprimés. Les problèmes principaux sont ici l'erreur de mesure et les trajets multiples des signaux de phase de porteuse. Bien que les valeurs typiques de la réfraction ionosphérique différentielle aux latitudes moyennes et de lignes de base en dessous de 100 kilomètres, soient justes de quelques TECU, l'utilisation de la correction ionosphérique peut augmenter de manière significative le pourcentage de réussite sur des distances plus importantes, et dans des scénarios ionosphériques plus difficiles.
Les détails principaux de cette étape vont maintenant être explicités.
Une fois que les premières ambiguïtés de "grande longueur d'onde" $\nabla \Delta N_{ew}$ sont résolues en utilisant des "pseudo-distances" correspondantes, une deuxième ambiguïté telle que la combinaison de "chemin long" $L_w$ exprimée par la relation suivante :

$$L_w = \lambda_w(\phi_1 - \phi_2) = \frac{f_1 L_1 - f_2 L_2}{f_1 - f_2} = \rho^* + \lambda_w b_w + \alpha_w I + m_w + \varepsilon_w + ... \qquad (4);$$

(relation dans laquelle $\phi_1$ et $\phi_2$ sont les phases de fréquences $L_1$ et $L_2$.) peut être estimée à partir de $\nabla\Delta N_{ew}$ et de la différence correspondante des phases de porteuse (voir les valeurs constantes correspondantes dans le TABLEAU I), conformément à la relation :

$$\nabla\Delta\hat{N}_w = \frac{\nabla\Delta L_w - \nabla\Delta L_{ew} + \lambda_{ew}\nabla\Delta N_{ew}}{\lambda_w} =$$

$$\nabla\Delta N_w - \frac{1}{\lambda_w}\nabla\Delta(\varepsilon_{ew} + m_{ew} - m_w) + \frac{1}{\lambda_w}(\alpha_w - \alpha_{ew})\nabla\Delta I \quad (5) ;$$

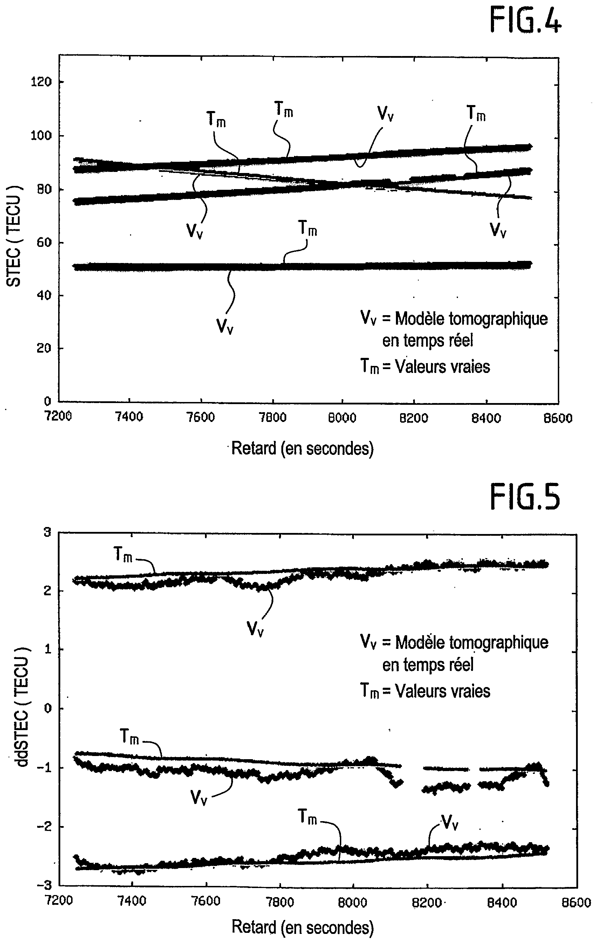

En effet, en présence de trajets multiples modérés, le terme d'erreur correspondant de la relation (5), qui inclut également l'erreur d'observation, est habituellement inférieure à 0,3 mètres, c'est-à-dire inférieur à 0,4 cycles. Le terme d'erreur subsistant de la résolution d'ambiguïté correspond à la réfraction ionosphérique à une valeur de 0,0580 cycles/TECU pour les fréquences de l'exemple (voir TABLEAU I). Ce terme peut dégrader le taux de réussite, mais ce n'est pas un terme critique aux latitudes moyennes et aux distances inférieures à quelques centaines de kilomètres, pour lesquelles la double différence des valeurs de "STEC", que l'on appellera ci-après, $\nabla\Delta I$, sont en général inférieures à 10 TECU. Un exemple sera détaillé ci-après par référence au diagramme de la figure 5.

C'est dans un tel contexte que l'utilisation d'un modèle ionosphérique en temps réel augmente les conditions de réussite de la résolution d'ambiguïté de "chemin extra-long", aux basses latitudes et pour des scénarios de lignes plus longues.

Étape 3 :

L'ambiguïté de phase de $L_1$ est dérivée de la différence entre $L_1$ et le "chemin long" non ambigu obtenu précédemment. Lors de cette étape, le problème principal est la réfraction différentielle ionosphérique correspondante (environ 1,9 cycles/TECU), qui peut produire des erreurs de plusieurs cycles aux latitudes moyennes.

Lors de la troisième étape, une approche semblable à la deuxième étape est mise en oeuvre, mais en utilisant les différences de phase de porteuse entre de longueurs d'onde courte et moyenne, au lieu de longueurs d'onde moyenne et longue, comme il ressort de la relation suivante (6) :

$$\nabla\Delta\hat{N}_1 = \frac{1}{\lambda_1}\nabla\Delta(L_1 - L_w + \lambda_w N_w) = \nabla\Delta N_1 - \frac{1}{\lambda_1}\nabla\Delta(\varepsilon_w + m_w - m_1) + \frac{1}{\lambda_1}(\alpha_1 - \alpha_w)\nabla\Delta I + \dots ;$$

relation dans laquelle $\alpha_1$ et $\alpha_w$ (de façon générale $\alpha_X$) sont des coefficients ionosphériques définis dans le TABLEAU I, dans l'exemple décrit.

Lors de la troisième étape, la combinaison de l'erreur de mesure de phase de porteuse et d'un trajet multiple modéré introduit encore une erreur typique inférieure à 0,2 cycles (voir TABLEAU I). Cependant, le problème critique ici est la réfraction ionosphérique qui peut introduire des erreurs supérieures à 0,5 cycles (-1,9475 cycles/TECU) également pour des lignes de base courtes.

Cette limitation fondamentale peut être surmontée en calculant des corrections ionosphériques en temps réel meilleures que 0,26 TECU (c'est-à-dire (0,5 cycles×1TECU)/1,9475) pour assurer la bonne évaluation d'ambiguïté de nombre entier. Ces corrections sont introduites lors de l'étape 4. qui va maintenant être décrite.

Étape 4 :

Pour surmonter le problème apparu à la troisième étape (c'est-à-dire pour déterminer les ambiguïtés de longueur d'onde les plus courtes), on détermine un modèle en temps réel pour estimer la réfraction différentielle ionosphérique. Ce modèle est calculé à partir de données de phases de porteuses, à double fréquence, à des emplacements fixes d'un réseau, de stations de référence. Il est assumé qu'ainsi, il est réalisé une description de la région ionosphérique traversée par le rayonnement d'ondes radioélectrique émises par des satellites. Les données de ce modèle sont combinées de façon connue avec des données issues d'un calcul géodésique simultané, ce dernier pouvant être effectué avantageusement par l'une de stations terrestres fixes du réseau, dite maître. L'avantage principal de cette technique est qu'elle permet d'estimer la réfraction différentielle avec une erreur typiquement inférieure à 0,25 TECU, ce à des distances de centaines de kilomètres du site de référence le plus proche et dans des conditions ionosphériques variées. Cette précision implique des erreurs typiques en dessous de 0,5 cycles dans la fixation instantanée de l'ambiguïté $L_1$ pour des distances moyennes et grandes.

La distribution ionosphérique d'électrons libres peut être déterminée de façon approchée par une grille d'unités de résolution de volumes, ou "voxels", dans laquelle la densité d'électrons est assumée constante à un instant donné dans un système "Inertiel à Centrage Terrestre" ("Earth Centred Inertial" ou "ECI" selon l'abréviation anglo-saxonne couramment utilisée).

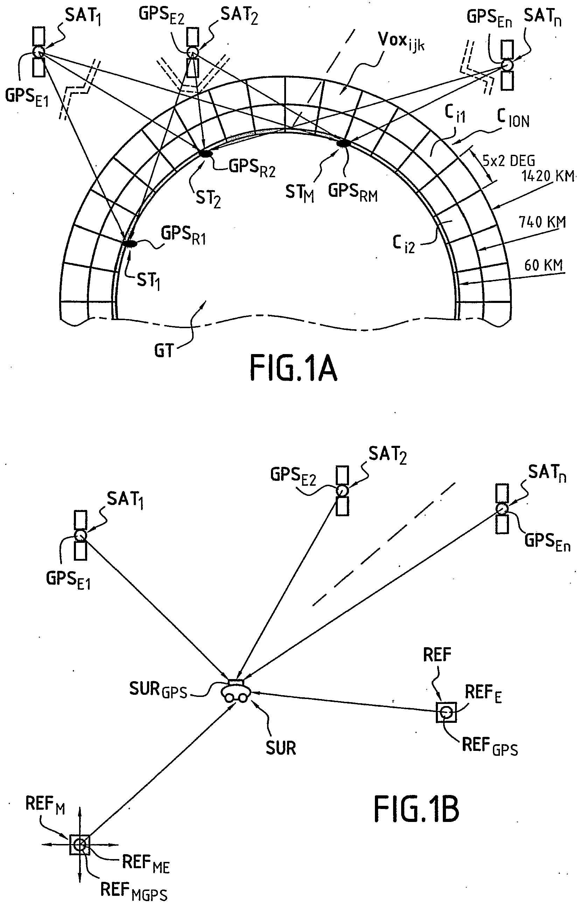

Une disposition typique de ce type est décrite sur la figure 1A. Cette figure 1A illustre schématiquement une tranche méridienne de voxels $Vox_{ijk}$ ($i, j, k$ étant des indices de coordonnées, pour la longitude, la latitude et l'altitude solaire, respectivement), dans lesquels la distribution ionosphérique de densité d'électrons est décomposée selon la relation (7), de manière à déterminer les données d'un modèle ionosphériques en temps réel.

Sur cette figure 1A, on a représenté le globe terrestre, $GT$, en coupe partielle, entouré de la couche ionosphérique $C_{ION}$, couche que l'on a subdivisé arbitrairement en deux couches intermédiaires, $C_{i1}$ et $Ci_2$, respectivement. L'altitude basse de la couche $C_{i1}$ est 60 Km, dans l'exemple décrit, et son altitude haute 740 Km. L'altitude basse de la couche $C_{i2}$ est 740 Km et son altitude haute 1420 km. Les surfaces angulaires des voxels $Vox_{ijk}$ sont de 5x2 degrés chacune.

Pour fixer les idées, on a représenté des satellites, $SAT_1$ à $SAT_n$ (trois ont été représentés sur les figures) dans lesquels sont embarquées des émetteurs "GPS", $GPS_{E1}$ à $GPS_{En}$, respectivement. Ces satellites, $SAT_1$ à $SAT_n$, sont en vue de tout ou partie de stations terrestres, par exemple les trois stations terrestres fixes de référence, $ST_1$ à $ST_M$, représentées sur la figure 1A, comprenant des récepteurs "GPS", $GPS_{R1}$ à $GPS_{Rn}$ et des moyens de calculs intégrés (non représentés).

Sur la figure 1B, on a représenté, de façon schématique, l'architecture d'un système de navigation complet, conforme à l'invention, vue du côté du nomade SUR.

Ce système nécessite un équipement, des interfaces et des ressources physiques, similaires à ceux de certains systèmes actuellement déployés, tels que EGNOS" ou WAS".

Le système pour la mise en oeuvre du procédé selon l'invention dernier comprend un récepteur "GPS", $SUR_{GPS}$, qui reçoit les signaux émis par des satellites, par exemple les satellites, $SAT_1$ à $SAT_n$, de la figure 1A. A partir de ces signaux sur trois bandes de fréquences, on effectue les trois étapes du procédé "TCAR", comme indiqué précédemment, à l'aide de moyens de calculs intégrés (non représentés).

Il reçoit également les signaux de données du modèle ionosphérique en temps réel déterminé par la station de référence $REF$ (la station la plus proche parmi les stations du réseau de stations terrestres fixes de référence, $ST_1$ à $ST_M$, de la figure 1A) à partir de signaux reçus des satellites, $SAT_1$-$GPS_{E1}$ à $SAT_n$-$GPS_{En}$, à l'aide un récepteur "GPS", $REF_{GPS}$. La station $REF$ émet les données du modèle vers le nomade $SUR$ par l'intermédiaire d'un émetteur $REF_E$.

Des données de configuration géodésique, qui peuvent être déterminés dans une seule station, dite maître, $REF_M$, sont émis par son émetteur $REF_{ME}$ et distribués au nomade $SUR$, pour être combinés avec les données du modèles ionosphérique. Cette station comprend a priori également un récepteur "GPS", $REFM_{GPS}$, comme les autres stations terrestres fixes de référence. Les données de configuration géodésique sont calculées simultanément aux données du modèle géodésique.

De façon bien connue, la détermination ionosphérique peut être obtenue en résolvant en temps réel, à l'aide d'un filtre de Kalman la densité moyenne d'électrons $N_e$ de chaque cellule illuminée $i, j$, et $k$, ($i, j$ et $k$ étant des indices de coordonnées en trois dimensions, comme précédemment défini) traitée comme un processus de propagation aléatoire, et avec un bruit de processus typique de $10^9$ à $10^{10}$ électrons/m3/$\sqrt{heure}$. A titre d'exemple non limitatif, un un traitement à l'ide d'un filtre de Kalman est décrit dans le livre de G.J. BIERMAN, intitulé : "Factorization Methods for Discrete Sequential Estimation", paru dans "Mathematics in Science and Engineering", vol 128, "Academic Press", NEW YORK, 1977.

Selon une caractéristique importante du procédé de l'invention, seules les données de phase de porteuse sont utilisées. De ce fait, le bruit de code de "pseudo-distance" et les trajets multiples sont évités. Les polarisations de phase de porteuse $B_I$ (constantes dans chaque arc continu de données de phase de porteuse pour chaque paire satellite-récepteur) sont estimées simultanément, en tant que variables aléatoires (qui deviennent des processus aléatoires de bruit blanc quand un glissement de cycle se produit). Dans le filtre, les polarisations sont décorrélées en temps réel des valeurs de densité d'électrons, dans la mesure où la géométrie de satellite change et les variations des deux sortes d'inconnues sont devenues plus petites, comme le montre la relation (7) ci-après qui représente le modèle pour des informations ionosphériques données, entre une paire satellite ["GNSS" - récepteur], $L_1$ et $L_2$ étant es phases de porteuse exprimées en unités de longueur, $L_I = L_1 - L_2$ et $N_e$ la densité d'électrons). $L_I$ est donné par la relation suivante :

$$L_I = STEC + B_I = \int_{REC}^{SAT} N_e \, dl + B_I = \sum_i \sum_j \sum_k (N_e)_{i,j,k} \, \Delta s_{i,j,k} + B_I \qquad (7) ;$$

relation dans laquelle les valeurs "REC" et "SAT" sont relatives à un récepteur GPS et un satellite, respectivement, d'une paire "récepteur-satellite", $dl$ une distance élémentaire sur la ligne de visée reliant cette paire et $\Delta s_{i,j,k}$ une surface élémentaire du "STEC" de coordonnée *i, j* et *k* étant des indices de coordonnées en trois dimensions, comme précédemment défini.

Cette approche convient, en particulier, pour détecter les caractéristiques locales de la distribution de densité d'électrons, et l'utilisation de deux couches avec des données au sol d'un système de navigation mondial par satellite ("GNSS" selon l'abréviation anglo-saxonne) au lieu d'une seule couche, selon les procédés habituels, réduit de manière significative le risque d'une mauvaise modélisation du contenu d'électrons.

Dans le cas des réseaux "WADGNSS" (pour "Wide Area Differential GNSS" ou "GNSS" différentiels sur une large zone), à partir du contenu de ces corrections en temps réel du contenu total d'électrons obliques, ou "STEC", obtenues par la relation (7), il est possible :

- premièrement, de former la double différence station-satellite, $\nabla\Delta STEC$, avec une erreur inférieure à 1 TECU et d'obtenir une deuxième ambiguïté (le "chemin long") dans les stations de référence ; et
- deuxièmement, d'interpoler, dans le récepteur du nomade, la valeur $L_I$ non ambiguë, c'est-à-dire une valeur très précise de $\nabla\Delta STEC$ à un niveau de quelques centièmes de TECU, valeur obtenue après la résolution des ambiguïtés.

Si la valeur interpolée est meilleure que 0,26 TECU, alors le récepteur du nomade peut résoudre les deux ambiguïtés en temps réel.

Ce procédé, en soi, est semblable au procédé dit "WARTK" paru dans l'article de Hernández-Pajares et al., (2000) précité. Les résultats obtenus jusqu'ici avec la technique "WARTK", dans différentes expériences, sont récapitulés dans un article également de Hernández-Pajares et al., intitulé : "Tomographic modeling of GNSS ionospheric corrections: Assessment and real-time applications", paru dans "ION GPS'2001", septembre 2001. On se reportera avec profit à ces deux articles pour une description plus détaillée de ce procédé.

Pour l'utilisation cinématique de ce procédé, une des limites les plus importantes est l'existence d'irrégularités ionosphériques locales, telles que des perturbations Ionosphériques de propagation ou "TID" (abréviation anglo-saxonne de "Traveling Ionospheric Disturbances"), qui peuvent produire de mauvais résultats en utilisant une interpolation linéaire des corrections ionosphériques entre les stations de référence du réseau. Les performances peuvent être améliorées en incorporant des données duales de fréquence du nomade.

D'autre part, dans le cas du calcul dans la station de référence, les longues distances et les gradients forts de contenu d'électrons peuvent aussi limiter les performances de la technique. Pour cette raison, selon une caractéristique du procédé de l'invention une procédure supplémentaire a été développée pour inclure le cas des stations permanentes et/ou de référence séparées par des milliers de kilomètres, en utilisant un code dit de "chemins longs" lissé, ce de façon à améliorer le modèle ionosphérique et par conséquent constituer une aide à la détermination en temps réel d'ambiguïté. Une telle procédure est décrite, par exemple, dans l'article de Hernández-Pajares et al., intitulé : "Improving the real-time ionosphéric détermination from GPS sites at Very Long Distances over the Equator", paru dans "Journal of Geophysical Research", 2002.

Cependant les méthodes mises en oeuvre dans l'art connu pour résoudre, en temps réel, l'ambiguïté dans le récepteur d'un nomade, faisant appel à un système de fréquences duales du "GPS" exige une grande quantité de calculs géodésiques, afin de garantir la détermination de position relativement bonne, au niveau de la vingtaine de centimètres, pour résoudre des combinaisons de polarisations flottantes libres ionosphériques, et alors de pouvoir (en mettant en oeuvre le procédé "WARTK" précité) résoudre les ambiguïtés en temps réel, ce après un temps de convergence de l'ordre de quelques minutes.

L'invention permet de pallier les déficiences de cet art connu, notamment présenté par le procédé "WARTK". Elle permet l'amélioration des méthodes instantanées de résolution d'ambiguïtés de phase de trois-porteuse aux distances moyennes et longues entre stations de référence (allant de dizaines à des centaines de kilomètres), et avec un minimum de calculs géodésique. L'amélioration principale réside dans la troisième étape du procédé "TCAR" précité, en utilisant des corrections ionosphériques en temps réel fournies par un modèle ionosphérique calculé sans interruption dans les stations de référence.

Une amélioration additionnelle de la première étape précitée est également implémentée dans le procédé de l'invention. Cette amélioration consiste en l'utilisation de trois codes de pseudo-distances distincts, appelés ci-après $P_1$, $P_2$, $P_3$, au lieu d'un élément de code unique, ce qui permet de diminuer l'effet des trajets multiples dans la résolution d'ambiguïté de "chemin extra-large"

En outre, dans un mode de réalisation préféré, un essai d'intégrité est réalisé en utilisant les codes de pseudo-distances de "chemin large" et de bande de fréquence $L_1$, pour détecter des sauts dans l'évaluation d'ambiguïté associée à une erreur dans la résolution d'ambiguïté longueur d'onde la plus longue. En effet, lors des deuxième et troisième étapes précitées, à partir des relations (5) et (6), on constate aisément qu'un cycle dans l'erreur d'ambiguïté de "chemin extra-large" produit environ huit cycles d'erreurs de "chemin large", et un cycle de "chemin large" se traduit par environ quatre cycles d'erreur $L_1$, $L_1$ étant la porteuse de plus petite longueur d'onde dans l'exemple décrit. Souvent, ces sauts d'évaluation d'ambiguïté sont suffisamment importants pour être détectés et filtrés en utilisant les codes correspondants.

**EP 1 576 387 B1**

Cette approche, selon l'invention, permet de venir à bout directement des limitations principales rendant impossible une navigation à une erreur typiquement inférieure à quelques centimètres sur de longues distances (plus de 100 kilomètres).

Le TABLEAU II disposé en fin de la présente description résume les caractéristiques comparées des principaux procédés de résolution d'ambiguïté en temps réel de l'art connu ("TCAR", "ITCAR", WARTK") et conforme à l'invention.

Pour mieux illustrer les caractéristiques principales du procédé selon l'invention, on va maintenant décrire un exemple d'expérimentation réalisé sur la base de plusieurs jeux de données fournis par des générateurs de signaux modifiés embarqués dans des satellites d'un système existant du type "GNSS" précité, avec simulation d'aéronefs, d'utilisateurs nomades de "surface" (véhicules terrestre par exemple) ou de sites fixes. Des conditions dynamiques et ionosphériques variées ont été considérées.

Pour fixer les idées, à titre d'exemple significatif, la résolution d'ambiguïté en temps réel du récepteur d'un véhicule de surface, appelé ci-après nomade *SUR*, a été étudiée en détail, ce par rapport à une station fixe de référence, appelée ci-après *REF,* éloignée d'environ 129 km du nomade *SUR*, ce dans différents scénarios. Dans l'exemple décrit, deux porteuses de "GPS" (1575,42 et 1227,60 MHz respectivement), et la porteuse du canal 24 du système "GLONASS", de fréquence 1615,50 MHz, constituaient les trois fréquences adoptées par un simulateur du système "GNSS", pour quatre satellites en vue pendant 20 minutes à 1 Hz, en utilisant les douze canaux disponibles d'un récepteur de validation de type connu sous la référence "AGGA" (pour "Advanced GPS/GLONASS ASIC"). "AGGA" est un circuit intégré numérique permettant un traitement de signal numérique à haute vitesse pour des applications spatiales, telles que les occultations de radio-transmissions d signaux de systèmes "DNSS" et de détermination d'orbites terrestres basses. Ce circuit est réalisé à base d'un "ASIC" standard (ou "circuit intégré pour applications spécifique", dans l'exemple décrit, un composant T7905E de la société ATMEL). "GLONASS" ("Global Orbiting Navigation Satellite System") est un système de navigation russe par satellite comparable au système "GPS".

Deux ensembles de données de base ont été considérés dans l'exemple décrit, ci-après référencés "P5-M0", ensemble associé à une puissance maximale de signal et pas de trajets multiples, ce qui constitue un cas idéal, et "P3-M1", ensemble associé à une puissance moyenne et des trajets multiples.

En plus des récepteurs des stations de référence, simulés dans les ensembles de données, trois stations additionnelles, existant dans le réseau "IGS" (pour "International GPS Service" ou "Service International GPS"), ont été ajoutées à des distances supérieures à 200 km, uniquement pour le calcul ionosphérique, ce qui a permis d'émuler une situation plus réaliste comprenant un réseau de sites fixes plus important.

On va maintenant montrer les résultats d'une étude détaillée pour le cas plus difficile, c'est-à-dire la ligne de base de la paire "nomade *SUR* - station *REF*" la plus longue, soit 129 km environ. La station de référence *REF* est l'une des stations $ST_1$ à $ST_M$ de la figure 1A.

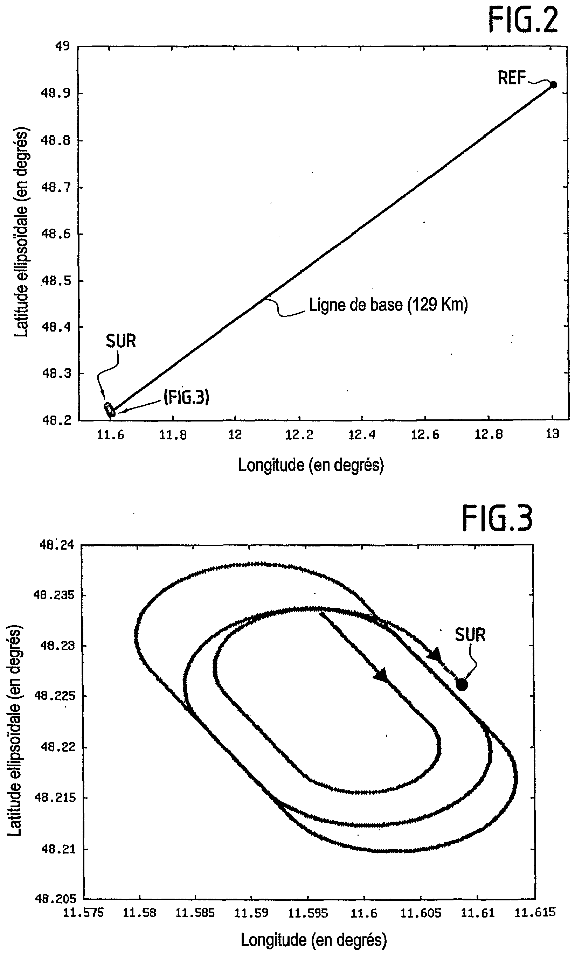

La figure 2 illustre cet exemple et représente la ligne de base et les positions de la station *REF* et du nomade *SUR*, par rapport à des axes de coordonnées, latitude ellipsoïdale et longitude, gradués en degrés.

La figure 3 est un agrandissement (zoom) de la figure 2 montrant la trajectoire du nomade *SUR*, toujours par rapport à des axes de coordonnées, latitude ellipsoïdale et longitude, gradués en degrés.

Le premier aspect des résultats est référencé en tant que performance du filtre ionosphérique en temps réel. Des exemples de retards estimés du modèle ionosphérique en temps réel, référencés *Tm* sur le graphique, comparés aux retards ionosphériques réels, référencés *Vv*, sont représentés sur la figure 4. Ces valeurs correspondent à des mesures d'une expérimentation effectuée pour montrer les possibilités du procédé selon l'invention.

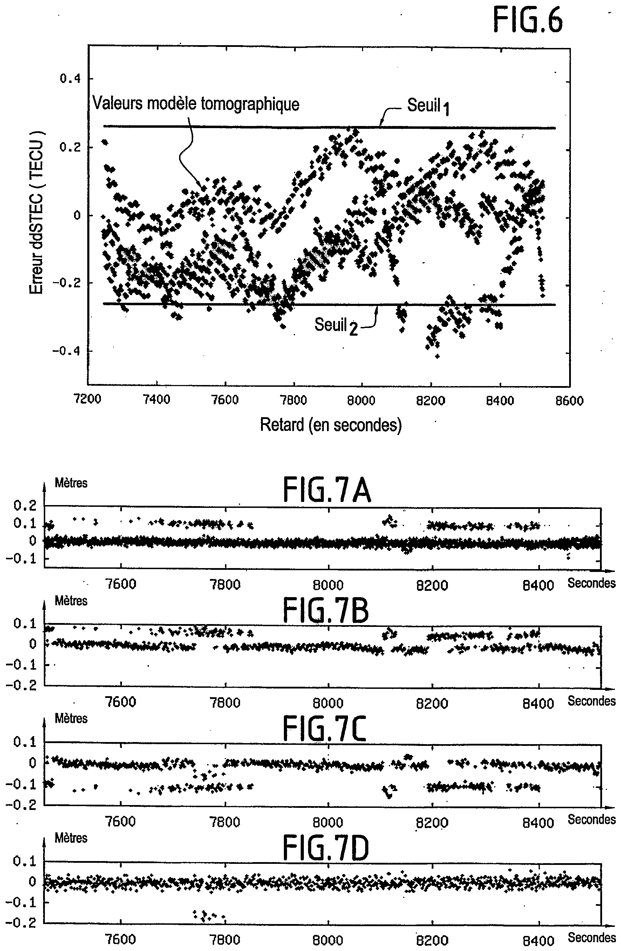

Et, paramètres plus importants pour une navigation précise, les valeurs et les différences (c'est-à-dire les erreurs) entre les doubles différences de "STEC" estimées, $\nabla\Delta\hat{I}$, pour le nomade *SUR,* et leurs valeurs réelles, $\nabla\Delta I$, sont reportées sur les figures 5 et 6 (en ordonnée, exprimées en TECU ; l'abscisse représentant des retards en secondes).

De façon plus précise, la figure 5 illustre la double différence de "STEC", notée *"ddSTEC",* estimée en temps réel avec un modèle ionosphérique, conformément à l'un des aspects importants de l'invention, comparé aux valeurs vraies pour le récepteur nomade *SUR*, ce rapporté au récepteur le plus éloigné, soit *REF* (éloignement d'environ 129 km).

La figure 6 illustre l'erreur dans la détermination du modèle ionosphérique en temps réel de la double différence de "STEC", également notée "ddSTEC". Les valeurs réelles du modèle ionosphérique sont comparées à deux seuils ionosphériques, "$Seuil_1$" (+ 0,26 TECU) et "$Seuil_2$" (- 0,26 TECU), permettant de déterminer la troisième ambiguïté $\nabla\Delta N_1$.

Plus de 92 % des déterminations ionosphériques présentent des erreurs au-dessous de la limite de seuil de $\pm$ 0,26 TECU. Elles sont donc assez précises pour pouvoir résoudre les trois ambiguïtés en l'absence de trajets multiples et pour ne pas tenir compte de l'erreur de mesure. La majeure partie des 8 % d'évaluations restantes présentant des erreurs supérieures à 0,26TECU provenaient d'un satellite qui était observé à basse altitude et dans la direction du sud, direction pour laquelle les gradients ionosphériques sont les plus élevés. Ces résultats ont pu encore être légèrement améliorés en additionnant aux quatre stations de référence une cinquième effectuant des calculs ionosphériques de corrections pour la direction sud.

Une fois que les corrections ionosphériques en temps réel ont été calculées et transmises à partir du réseau de référence, les étapes du procédé selon l'invention peuvent être effectuées dans le nomade *SUR*, de la façon précédemment décrite pour estimer et résoudre instantanément ("single epoch") les trois ambiguïtés par faisceau.

Un résumé des principaux résultats de la résolution d'ambiguïté, pour les ensembles précités de données "P5-M0" et "P3-M1" respectivement, est présenté sous la forme de deux TABLEAUX, III et IV, disposés en fin de la présente description. Les taux de réussite des trois étapes du procédé "TCAR", sont indiqués dans les trois cas suivants :

(a) sans corrections ionosphériques ;
(b) avec des corrections ionosphériques correspondantes d'un modèle de corrections ionosphériques de Klobuchar, émises par le système "GPS " actuel ; et
(c) avec des corrections de modèle ionosphérique en temps réel, conformément au procédé de l'invention.

De façon plus précise, dans l'exemple décrit en relation avec le TABLEAU III, le taux de réussite (en %) est relatif à un nombre de 3834 essais de résolution au vol pour les ambiguïtés de "chemin extra-long", de "chemin long" et de fréquence de la bande $L_1$ (respectivement $\nabla \Delta N_{ew}$, $\nabla \Delta N_w$ et $\nabla \Delta N_1$) pour le récepteur nomade *SUR,* rapporté au site fixe plus éloigné *REF* (éloignement d'environ 129 kilomètres), et avec l'ensemble de données idéal P5-M0 précité (puissance maximale de réception et aucun trajet multiple).

Le TABLEAU IV est similaire au TABLEAU III, mais pour l'ensemble de données P3-M1 précité (niveau de puissance de réception moyen et trajets multiples). Les chiffres entre parenthèses indiquent le taux de réussite ramené au nombre total d'observations.

On constate aisément, à l'examen des TABLEAUX III ET IV, que le procédé de l'invention combinant les trois étapes du procédé "TCAR" avec une étape d'application d'un modèle ionosphérique précis en temps réel, permet d'augmenter considérablement le taux de réussite de détermination d'ambiguïté instantanée ("single epoch"), non seulement dans un scénario idéal (ensemble de données P5-M0 : de 0 à 92 %) mais également dans un scénario plus difficile (ensemble de données "P3-M1") avec des trajets multiples (35 % même en utilisant une correction du type "modèle de Klobuchar", alors que taux de réussite atteint 92 % pour $\nabla \Delta N_1$, avec des corrections du modèle ionosphérique réalisées selon le procédé de l'invention).

L'examen du TABLEAU IV montre qu'un des problèmes importants avec les ensembles de données "P3-M1", affectés par des trajets multiples, est le manque d'intégrité dans les évaluations d'ambiguïtés selon le procédé "TCAR", $\nabla \Delta N_{ew}$ et $\nabla \Delta N_w$, avec environ 10 % et 4 % de déterminations instantanées incorrectes, respectivement.

Pour augmenter l'intégrité, c'est-à-dire pour diminuer la possibilité de prendre en considération des ambiguïtés incorrectes, dans ce cas-ci en présence de phase de porteuse et pour coder par trajets multiples, il est possible d'utiliser les codes correspondants de pseudo-distances de "chemin long" et $L_1$, pour tenter de détecter des erreurs potentielles de détermination d'ambiguïté de l'ambiguïté de longueur d'onde la plus longue précédente dans l'approche "TCAR" (des ambiguïtés de "chemin extra-long" et de "chemin long", respectivement), erreurs qui sont amplifiées par un facteur de 9 et 4 longueurs d'onde dans le "chemin extra-long" et le "chemin long", respectivement, comme le montre les relations (5) et (6).

Un résumé des résultats correspondants est présenté sous la forme de deux TABLEAUX, V et VI, disposés en fin de la présente description, en utilisant respectivement les pseudo-distances et les pseudo-distances lissées pour filtrer de telles erreurs importantes.

Le TABLEAU V est similaire au TABLEAU II, mais le taux de réussite de résolution d'ambiguïté est ici calculé après avoir subi un test d'intégrité, c'est-à-dire une comparaison à l'ambiguïté dérivée de pseudo-distance pour filtrer les grands sauts dans l'ambiguïté de "chemin long" et de $L_1$, ces sauts étant dus à des erreurs précédentes d'ambiguïté de longueur d'onde plus importante. La dernière colonne indique la disponibilité, c'est-à-dire le pourcentage des 3834 observations passant l'essai d'intégrité précédent avec les pseudo-distances. Le signe entre parenthèse "*" indique les pourcentages des ambiguïtés calculées après passage du test d'intégrité. Comme précédemment, les chiffres entre parenthèses indiquent le taux de réussite ramené au nombre total d'observations.

Le TABLEAU VI est similaire au TABLEAU III, mais des pseudo-distances lissées sont utilisées à la place de pseudo-distances "pures" pour réaliser le test d'intégrité.

On constate aisément que procédé de l'invention permet une amélioration significative d'environ 20 % de l'intégrité (de 79 % : TABLEAU IV à 91 % : TABLEAU VI), ce avec une diminution relativement faible (16 %) de la disponibilité (celle-ci passe de 100 % à 84 %) par l'utilisation d'un test d'intégrité de code lissé. Si des codes instantanés ("single epoch") sont utilisés en remplacement, l'intégrité est également améliorée (84 %) et, ce, avec une disponibilité plus élevée (90 %). En utilisant un modèle connu d'émission "GPS" de type Klobuchar, au lieu des corrections du modèle ionosphérique en temps réel selon le procédé de l'invention, on constate une détérioration nette des résultats, accompagné d'un manque quasi-complet de disponibilité.

Les ensembles de données disponibles pour l'expérimentation qui vient d'être détaillée, malgré le fait qu'ils étaient appropriés pour établir une résolution instantanée d'ambiguïté, étaient cependant très limités pour déterminer une position de façon instantanée ("single epoch"). En effet, pour l'expérimentation, seuls quatre satellites en vue étaient disponibles pendant 20 minutes de données, de telle sorte que la solution de navigation instantanée pour le nomade *SUR* a du être calculée en utilisant l'ensemble de données "P5-M0" sans trajets multiples, et avec un rapport signal sur bruit disponible très élevé, afin de disposer d'un nombre minimum de quatre satellites pour la navigation. De plus, le retard troposphérique, pour l'évaluation duquel un cinquième satellite au moins aurait été nécessaire, a été omis. Enfin, le premier intervalle, entre 7200 à 7500 secondes approximativement, a été évité dans I détermination du positionnement en relation avec certaines configurations de coupure de phase de porteuse, potentiellement dus à des problèmes de mesure dans le récepteur pendant cette période. D'autre part, et du point de vue des corrections ionosphériques et du taux de réussite correspondant de la résolution d'ambiguïté, les résultats sont pratiquement les mêmes que ceux obtenus pour l'ensemble de données "P3-M0" (voir TABLEAU III).

Ces limitations sont dues à l'utilisation d'ensembles de données fournis par des systèmes existants, n'ayant subi qu'un minimum d'adaptations. Avec un ensemble de données plus réaliste, par exemple fourni par six satellites ou plus, ces limitations importantes concernant la détermination de positionnement disparaîtront. Il sera en effet possible d'obtenir une meilleure géométrie (un facteur de géométrie "DOP", ou facteur de "Dilution de Précision" de géométrie, plus faible) et la possibilité de détecter et de filtrer des satellites (typiquement aucun, ou parfois un seul) présentant des erreurs d'ambiguïté. Ceci pourra être réalisé en utilisant un filtre de navigation ou des algorithmes de surveillance autonomes de récepteur).

Les résultats correspondants aux quatre satellites contenus dans l'ensemble de données P5-M0 sont indiqués dans les figures 7A à 7D, montrant les résiduels de pré-ajustement (Figure 7A), les composants d'Est (Figure 7B), de Nord (7C) et de verticale (7D) de l'erreur de positionnement instantanée après mise en oeuvre du procédé selon l'invention, pour un nomade *SUR* éloigné de 129 km environ d'une station de référence *REF.* les ordonnées des graphiques sont graduées en mètres et les abscisses (retards) en secondes.

A titre de comparaison, les figures, 8A à 8D, représentent des données correspondantes mais pour des ambiguïtés réelles.

La caractéristique principale des résiduels de pré-ajustement $\nabla\Delta L_c$ (Figure 7A) sont des erreurs d'environ 10 cm associées à une erreur de un cycle dans $L_1$ (environ 8 % : voir TABLEAU III), qui produisent des erreurs de navigation ("single epoch") semblables à des sauts. Elles sont également représentées dans les figures 7B à 7D. Elles sont amplifiées par la dilution correspondante de facteur géométrique de précision ("DOP"). Ces mauvaises évaluations de l'ambiguïté $L_1$ affectent typiquement une double différence sur chacune des trois qui sont disponibles par époque (le nombre minimum pour déterminer un positionnement), ce de telle manière que cette erreur affecte trois fois le positionnement (environ 24 % des époques, avec 76 % des erreurs en trois dimensions en dessous de 5 cm et 100 % en dessous de 21 centimètres). Bien que la distribution des erreurs ne soit pas gaussienne, les valeurs efficaces ("RMS") résultantes en trois dimensions sont de 7, 3,5 et 2 centimètres, pour les composants d'Est, de Nord et de verticale, respectivement.

Pour résumer ces résultats, des erreurs de 1, 1 et 2 cm "RMS" sont obtenues pour les composantes d'Est, de Nord et de verticale, respectivement, quand l'ambiguïté est bien résolue (environ de 92 % des essais et 77 % des époques) et de 3, 5 et 2 cm "RMS" pour les composants d'est, de Nord et de verticale, respectivement, en incluant les époques avec une mauvaise résolution d'ambiguïté.

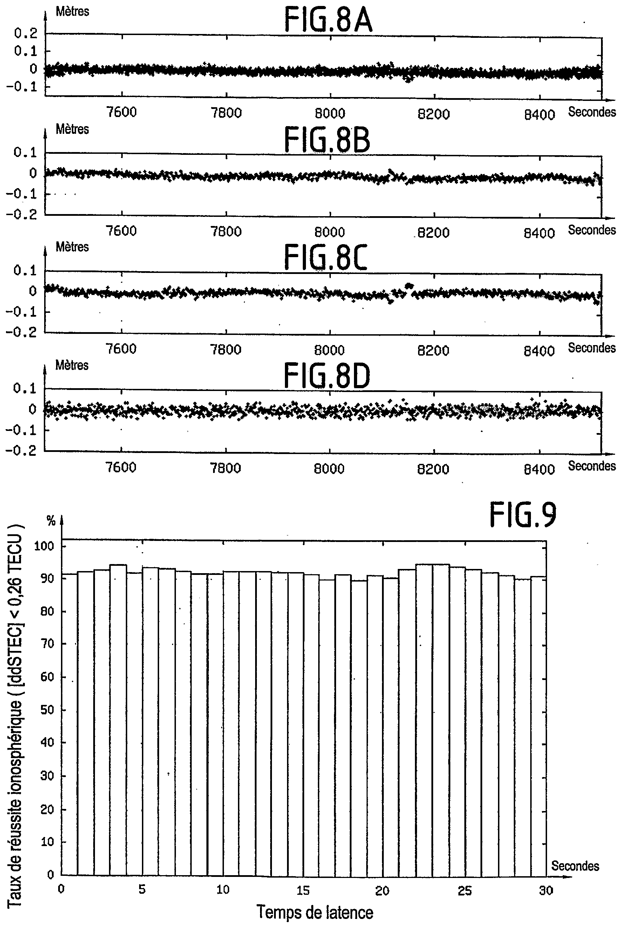

En outre, les observations minorées de calculs de résiduels, avant ajustement, de la double différence de phase de porteuseset les erreurs de navigation instantanées ("single epoch") sont représentées sur les figures 8A à 8D. On constate que l'amplification du bruit de phase de porteuse est nette, en particulier dans la composante verticale, atteignant environ 5 cm d'erreur. Cette trajectoire (avec une valeur "RMS" en trois dimensions de 3 cm, 1,1 cm et 2 cm pour les composantes de Nord, d'Est et de verticale, et des niveaux de 95 % à environ 2, 2 et 4 cm, respectivement) représente tout à fait bien la solution qui pourrait être obtenue avec un filtre en temps réel, au lieu de la solution en mode instantané ("single epoch"), après la résolution correcte des ambiguïtés pendant les premières époques.

Afin de caractériser l'impact des temps de latence dans la correction ionosphérique (dû par exemple à des problèmes potentiels dans les communications), des retards de 1 à 30 secondes (30 époques) ont été considérés pour les calculs ionosphériques de correction dans le réseau de stations fixes. Pour chacun de ces retards, on a calculé le pourcentage de réussite pour une "ddSTEC" (en TECU) pour obtenir une précision absolue de 0,26 TECU, pour un nomade éloigné de 129 km. Ce pourcentage a été reporté sur la figure 9 en fonction du temps de latence (en secondes). On constate aisément que l'effet des temps de latence est négligeable jusqu'à 30 s, avec un taux de réussite atteint, pour tous les temps de latence, supérieur à 90 %.

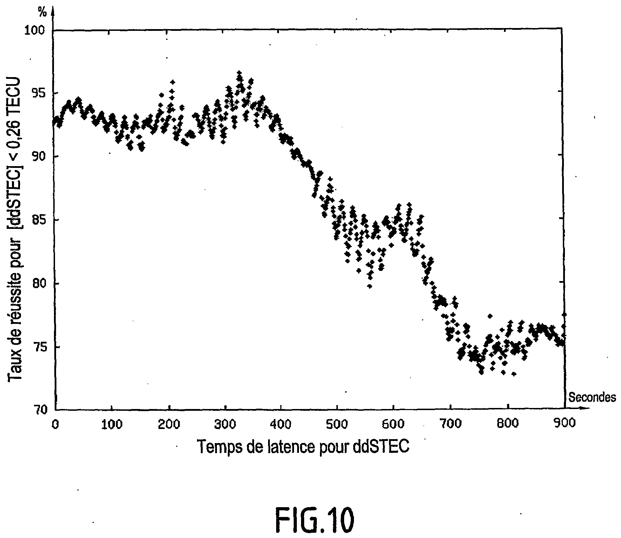

Sur la figure 10, de plus grands temps de latence ont été considérés, mais ceci à la fois pour les corrections de réseau de référence et de nomade, de telle sorte que les points d'entrée ionosphériques restent étroits. On constate qu'après 5 minutes, le taux de réussite diminue de 90 % à 85 %. Après 10 minutes, le taux de réussite diminue encore pour atteindre 75 %. Ces valeurs peuvent se dégrader plus fortement dans des scénarios présentant une variation du retard ionosphérique différentiel encore plus élevée.

On constate donc, qu'à une latitude moyenne, le temps de latence ne pose pas un problème important pour le procédé selon l'invention qui peut supporter des temps de latence allant typiquement jusqu'à 5 minutes environ.

A la lecture de ce qui précède, on constate aisément que l'invention atteint bien les buts qu'elle s'est fixés.

Le procédé selon l'invention permet, en appliquant des corrections ionosphériques en temps réel, à l'aide d'un modèle tomographie de l'ionosphère, accompagnées d'un minimum de calculs géodésiques, une résolution instantanée d'ambiguïté complète. Elle permet une navigation avec une précision de l'ordre du centimètre, à des distances de plus de 100 kilomètres de stations de référence.

L'invention trouvera une application préférée dans les prochains systèmes de navigation par satellite, tel que "GALLILEO" ou le "GPS" modernisé, mettant en oeuvre l'émission de porteuses sur trois bandes fréquences distinctes.

Selon une caractéristique principale du procédé selon l'invention, cette possibilité de navigation instantanée, à une précision meilleure que le décimètre, est due au fait que l'on combine un procédé de résolution d'ambiguïté de phase de trois porteuses, de type "TCAR", peu complexe, avec une détermination d'un modèle ionosphérique en temps réel en vue de pouvoir appliquer des corrections ionosphériques.

Les exemples d'expérimentation rappelés dans la présente description, montrent montre une amélioration nette des résultats obtenus par des procédés de l'art connu, dans des conditions équivalentes :

- Le taux instantané de réussite ("single epoch") d'environ 60 % ou moins est amélioré et passe à environ à 90 %, ce à des distances de plus de 100 km d'une station terrestre fixe de référence la plus proche, et dans des conditions difficiles pour réaliser un modèle ionosphérique (à midi au maximum solaire) ;
- Ce rendement élevé est maintenu avec des temps de latence d'environ 5 minutes dans les corrections ionosphériques ;
- La navigation correspondante, malgré le nombre limité de quatre satellites disponibles, pour les conditions d'expérimentation retenues à titre d'exemple, dans les ensembles de données, peut être fait instantanément, en mode "single epoch", et permet des valeurs "RMS" en trois dimensions, de 3, 5 et 2 centimètres pour les composantes d'Est, de Nord et de verticale, respectivement ;
- Dans un mode de réalisation préféré, un essai en temps réel d'intégrité d'ambiguïté, dans la mesure où une approche de réduction simple de trajets multiple pseudo-distances a été incorporée au procédé a permis d'en améliorer les performances ; et
- Ces bonnes performances ont été également prouvées dans des scénarios difficiles :

  • Faible latitude (35 degrés au lieu de 48 degrés), avec des valeurs ionosphériques plus élevées.
  • Conditions extrêmes en ce qui concerne le tropique, au-dessous de "l'Anomalie Équatoriale Nordique" de l'Ionosphère, où se produisent typiquement les gradients les plus élevés. Dans ce dernier cas, il est nécessaire que l'utilisateur produise sa propre alimentation de filtre ionosphérique et la combine avec les corrections du réseau de référence et ses propres observations ionosphériques.
  • Dynamique élevée, rendant possible la fourniture de corrections ionosphériques précises utilisable par un aéronef volant d'avion à environ 140 km de la station de référence le plus proche.

Il doit être clair cependant que l'invention n'est pas limitée aux seuls exemples de réalisations explicitement décrits, notamment en relation avec les figures 1 à 8.

Enfin, les exemples numériques n'ont été fournis que pour mieux fixer les idées et ne sauraient constituer une quelconque limitation de la portée de l'invention. Ils procèdent d'un simple choix technologique à la portée de l'Homme de Métier.

**TABLEAU I**

|  | X=1 | X=2 | X=3 | X=ew | X=w |
|---|---|---|---|---|---|
| **Fréquence** ($f_X$, MHz) | 1575.42 | 1227.6 | 1615.5 | 40.08 | 347.82 |
| **Longueur d'onde** ($\lambda_X$, m) | 0.1903 | 0.2442 | 0.1856 | 7.4799 | 0.8619 |
| **Erreur de mesure de phase** ($\varepsilon_X$, m) | $\approx$0.002 | $\approx$0.002 | $\approx$0.002 | $\approx$0.1 | $\approx$0.01 |
| **Erreur de mesure de code** ($E_X$, m) | $\approx$3 | $\approx$3 | $\approx$3 | $\approx$2.1 | $\approx$2.1 |
| **Phase de trajets multiples maximale** ($m_X$, m) | 0.05 ($\leq$ 0.01) | <<0.06 ($\leq$ 0.01) | <<0.05 ($\leq$ 0.01) | <<2 ($\leq$ 0.5) | <<0.2 ($\leq$ 0.05) |
| **Code de trajets multiples maximum** ($M_X$, m) | <<450 ($\leq$ 10) | <<450 ($\leq$ 10) | <<450 ($\leq$ 10) | <<450 ($\leq$ 10) | <<450 ($\leq$ 10) |
| **Coefficient ionosphérique** ($\alpha_X$, m/TECU) | -0.1623 | -0.2673 | -0.1543 | 0.2083 | 0.2031 |

**TABLEAU II**

|  | Avantages | Inconvénients |
|---|---|---|
| "TCAR" | Faible charge de calculs | Erreur ionosphérique limitant sérieusement la résolution de troisième ambiguïté |
| "ITCAR" | Résultats améliorés en intégrant TCAR dans un filtre de navigation | Le retard ionosphérique continue de limiter la résolution de troisième ambiguïté |
| "WARTK" | Une modélisation en temps réel précise permet une navigation précise à une centaine de kilomètres de la station de référence la plus proche | Charge élevée de calculs : un besoin de calcul d'une première solution indépendante de l'ionosphère pour le nomade et un temps de convergence significatif sont nécessaires |
| Procédé conforme à l'invention | Faible charge de calcul et modélisation précise en temps réel de l'ionosphère, permettant une navigation du type "single epoch" précise à des éloignements de plus de 100 Km d'une station de référence. | |

**TABLEAU III**

| P5-M0 / SUR2-REF5 ($\approx$129km) | Taux de réussite $\nabla\Delta N_{ew}$ | Taux de réussite $\nabla\Delta N_w$ | Taux de réussite $\nabla\Delta N_1$ |
|---|---|---|---|
| Sans corrections ionosphériques | 100% | 100% | 0% |
| Corrections de Klobuchar | 100% | 100% | 33% |
| Corrections ionosphériques en temps réel | 100% | 100% | 92% |

**TABLEAU IV**

| P5-M0 / SUR2-REF5 ($\approx$129km) | Taux de réussite $\nabla\Delta N_{ew}$ | Taux de réussite $\nabla\Delta N_w$ | Taux de réussite $\nabla\Delta N_1$ |
|---|---|---|---|
| Sans corrections ionosphériques | 90% | 95% (86)% | 3% (2) |
| Corrections de Klobuchar | 90% | 95% (87)% | 35% (31) |
| Corrections ionosphériques en temps réel | 90% | 95% (86)% | 92% (79) |

**TABLEAU V**

| P3-M1 SUR2-REF5 ($\approx$129km) | Taux de réussite $\nabla\Delta N_{ew}*$ | Taux de réussite $\nabla\Delta N_w*$ | Taux de réussite $\nabla\Delta N_1*$ | Disponibilité |
|---|---|---|---|---|
| Sans corrections ionosphériques | 99% | 95% (94) | 0(2)% | 38% |
| Corrections de Klobuchar | 99% | 97% (96) | 33% (32) | 38% |
| Corrections ionosphériques en temps réel | 96% | 96% (92) | 91% (84) | 90% |

**TABLEAU VI**

| P3-M1 / SUR2-REF5 ($\approx$129km) | Taux de réussite $\nabla \Delta N_{ew}$* | Taux de réussite $\nabla \Delta N_w$* | Taux de réussite $\nabla \Delta N_1$ | Disponibilité |
|---|---|---|---|---|
| **Sans corrections ionosphériques** | 100% | 100% (100) | 0% (0) | 0.002% |
| **Corrections de Klobuchar** | 100% | 100% (100) | 37% (37) | 0.002% |
| **Corrections ionosphériques en temps réel** | 100% | 100% (100) | 91% (91) | 84% |

**Revendications**

**1.** Procédé de navigation en temps réel à l'aide de signaux radioélectriques à trois porteuses de première, deuxième et troisième fréquences distinctes, de valeurs croissantes en allant de ladite première à ladite troisième fréquence, pour déterminer la position d'un utilisateur, dit nomade (SUR), lesdits signaux radioélectriques étant émis par un nombre déterminé d'émetteurs embarqués dans des satellites (SAT) tournant autour du globe terrestre et en vue dudit nomade, lesdits signaux étant reçus par un récepteur associé au dit nomade et un récepteur associé à au moins une station terrestre parmi une pluralité de stations terrestres fixes, dites de référence (REF), lesdits signaux radioélectriques traversant une couche de l'atmosphère dite ionosphérique ($C_{ION}$) entourant ledit globe terrestre et y subissant des perturbations engendrant des ambiguïtés de phases desdites porteuses, ce procédé comprenant au moins les étapes suivantes :

- une première étape consistant en la détermination, dans ledit nomade (*SUR*), de l'ambiguïté de différence de phases entre lesdites troisième et deuxième porteuses, dite de "chemin extra-long", à partir d'une combinaison de pseudo-distances utilisant une valeur de code unique ;
- une deuxième étape consistant en l'estimation, dans ledit nomade (*SUR*), de l'ambiguïté de différence de phases entre lesdites première et deuxième porteuses, dite de "chemin long", à partir de ladite ambiguïté de "chemin extra-long" déterminée lors de ladite première étape ;
- une troisième étape consistant, dans ledit nomade (*SUR*), en la résolution de l'ambiguïté d'une desdites fréquence, à partir de ladite ambiguïté de "chemin long" estimée lors de ladite deuxième étape ;

ce procédé **caractérisé en ce qu'**il comprend:

- une étape supplémentaire consistant en l'application de corrections ionosphériques en temps réel pendant ladite troisième étape, lesdites corrections ionosphériques étant basées sur un modèle ionosphérique en temps réel de ladite couche ionosphérique ($C_{ION}$) continûment mis à jour.

**2.** Procédé selon la revendication 1, **caractérisé en ce que** lors de ladite troisième étape, la dite résolution d'ambiguïté est effectuée sur ladite deuxième fréquence de porteuse.

**3.** Procédé selon l'une quelconque des revendications 1 ou 2, **caractérisé en ce que** ledit modèle est un modèle ionosphérique de description de ladite couche ionosphérique, déterminé par au moins une desdites stations terrestres de référence (*REF*) recevant des signaux émis par un nombre prédéterminé desdits satellites ($SAT_1$-$GPS_{E1}$ à $SAT_n$-$GPS_{En}$) tournant autour du globe terrestre (*GT*) et en vue de celle-ci, lesdits signaux comprenant au moins deux porteuses de fréquences distinctes, **en ce que** ledit modèle est déterminé à partir de données de phases desdits signaux émis, et **en ce qu'**il comprend une étape de transmission de données correspondant au dit modèle ionosphérique.

**4.** Procédé selon la revendication 3, **caractérisé en ce que** ladite détermination de modèle ionosphérique est obtenue à partir de l'estimation de la distribution d'électrons libre dans ladite couche ionosphère ($C_{ION}$), **en ce que** cette estimation étant réalisée de façon approchée en décomposant la couche ionosphérique ($C_{ION}$) en une grille d'unités de résolution de volumes ($Vox_{ijk}$), dits "voxels", illuminées par le rayonnement radioélectrique desdits signaux se propageant dans la dite couche ionosphérique ($C_{ION}$), dans lesquelles la distribution ionosphérique de densité d'électrons est assumée constante à un instant donné, et **en ce que** ladite détermination est obtenue par résolution en temps réel de la densité moyenne d'électrons dans chacune desdites unités de volume ($Vox_{ijk}$) illuminées par

ledit rayonnement radioélectrique en faisant usage d'un filtre dit de Kalman.

**5.** Procédé selon la revendication 4, **caractérisé en ce qu'**il comprend une étape supplémentaire consistant à combiner des données associées au dit modèle ionosphérique à des données géodésiques calculées simultanément, et **en ce que** lesdites données géodésiques sont calculées par une seule des dites stations terrestres fixes de référence ($REF_M$-$REF_{ME}$), dite station maître, et distribuées à ladite pluralité de stations terrestres fixes de référence ($REF$).

**6.** Procédé selon la revendication 1, **caractérisé en ce qu'**il comprend une étape supplémentaire consistant à utiliser trois codes de pseudos-distances, associés aux dites trois porteuses, lors de ladite première étape détermination de l'ambiguïté de différence de phases entre lesdites troisième et deuxième porteuses, dite de "chemin extra-long".

**7.** Procédé selon la revendication 2, **caractérisé en ce qu'**il comprend une étape supplémentaire consistant à effectuer un essai d'intégrité en utilisant des codes de pseudo-distances de "chemin large" et de ladite deuxième fréquence pour détecter des sauts associés à une erreur dans ladite résolution d'ambiguïté de ladite première fréquence.

**8.** Système de navigation par satellite pour la mise en oeuvre du procédé selon l'une quelconque des revendications précédentes, **caractérisé en ce qu'**il comprend une pluralité de satellites ($SAT_1$-$GPS_{E1}$ à $SAT_n$-$GPS_{En}$) tournant autour du globe terrestre ($GT$), chacun des satellites émettant lesdits signaux à trois porteuses de fréquences distinctes, au moins un nomade (SUR) comprenant un récepteur ($SUR_{GPS}$) desdits signaux et des moyens de calcul intégrés effectuant lesdites première à troisième étapes et intégrer lesdites corrections ionosphérique issues d'un modèle ionosphérique de description d'une région de l'ionosphère traversée par le rayonnement radioélectrique desdits signaux émis par ladite pluralité de satellites ($SAT_1$-$GPS_{E1}$ à $SAT_n$-$GPS_{En}$), une pluralité de stations terrestres fixes dites de référence ($REF$) comprenant chacune un récepteur ($REF_{GPS}$) recevant lesdits signaux émis par lesdits satellites, des moyens de calculs intégrés pour la détermination dudit modèle ionosphérique de description de la couche ionosphérique ($C_{ION}$), et un émetteur ($REF_E$) pour transmettre des données correspondant au dit modèle ionosphérique au dit récepteur ($SUR_{GPS}$) de nomade ($SUR$) et **en ce qu'**au moins une desdites stations terrestres fixes de référence ($REF_M$), dite maître, comprend un récepteur ($REFM_{GPS}$) desdits signaux émis par ladite pluralité de satellites ($SAT_1$-$GPS_{E1}$ à $SAT_n$-$GPS_{En}$), des moyens de calcul de données géodésiques et un émetteur ($REF_{ME}$) pour les distribuer à ladite pluralité de stations terrestres fixes de référence ($REF$).

**9.** Système selon la revendication 8, **caractérisé en ce que** ledit nomade *(SUR)* est situé à une distance de plus de 100 Km de la station terrestre fixe de référence la plus proche *(REF)*.

**Patentansprüche**

**1.** Echtzeit-Navigationsverfahren mit Hilfe von Funksignalen mit drei Trägern unterschiedlicher erster, zweiter und dritter Frequenz, mit zunehmenden Werten von der ersten zur dritten Frequenz, um die Position eines Nomade (SUR) genannten Benutzers zu bestimmen, wobei die Funksignale von einer bestimmten Anzahl von in um den Erdball und in Sichtweite des Nomaden drehenden Satelliten (SAT) befindlichen Sendern gesendet werden, wobei die Signale von einem dem Nomaden zugeordneten Empfänger und einem mindestens einer Bodenstation unter einer Vielzahl von ortsfesten Bodenstationen, Bezugsstationen (REF) genannt, zugeordneten Sender empfangen werden, wobei die Funksignale eine so genannte ionosphärische Schicht der Atmosphäre ($C_{ION}$) durchqueren, die den Erdball umgibt, und dort Störungen erfahren, die Phasenmehrdeutigkeiten der Träger erzeugen, wobei dieses Verfahren mindestens die folgenden Schritte enthält:

- einen ersten Schritt, der aus der Bestimmung, im Nomaden (SUR), der so genannten "Extralangweg"-Phasendifferenz-Mehrdeutigkeit zwischen dem dritten und dem zweiten Träger, ausgehend von einer Kombination von Pseudo-Entfernungen, besteht, die einen einzigen Codewert verwendet;
- einen zweiten Schritt, der aus der Schätzung, Im Nomaden (SUR), der so genannten "Langweg"-Phasendifferenz-Mehrdeutigkeit zwischen dem ersten und dem zweiten Träger ausgehend von der "Extralangweg"-Mehrdeutigkeit besteht, die im ersten Schritt bestimmt wird;
- einen dritten Schritt, der im Nomaden (SUR) aus der Auflösung der Mehrdeutigkeit einer der Frequenzen ausgehend von der "Langweg"-Mehrdeutigkeit besteht, die im zweiten Schritt geschätzt wird;
wobei dieses Verfahren **dadurch gekennzeichnet ist, dass** es enthält:

- einen zusätzlichen Schritt, der aus der Anwendung von ionosphärischen Echtzeit-Korrekturen während des dritten Schritts besteht, wobei die ionosphärischen Korrekturen auf einem ionosphärischen Echtzeit-Modell der ionosphärischen Schicht ($C_{ION}$) basieren, das durchgehend aktualisiert wird.

2. Verfahren nach Anspruch 1, **dadurch gekennzeichnet, dass** im dritten Schritt die Mehrdeutigkeitsauflösung an der zweiten Trägerfrequenz durchgeführt wird.

3. Verfahren nach einem der Ansprüche 1 oder 2, **dadurch gekennzeichnet, dass** das Modell ein ionosphärisches Beschreibungsmodell der ionosphärischen Schicht ist, bestimmt durch mindestens eine der Bezugs-Bodenstationen (REF), die von einer vorbestimmten Anzahl der um den Erdball (GT) und in deren Sichtweite drehenden Satelliten ($SAT_1$-$GPS_{E1}$ bis $SAT_n$-$GPS_{En}$) gesendete Signale empfängt, wobei die Signale mindestens zwei Träger unterschiedlicher Frequenzen enthalten, dass das Modell ausgehend von Phasendaten der gesendeten Signale bestimmt wird, und dass es einen Schritt der Übertragung von Daten enthält, die dem ionosphärischen Modell entsprechen.

4. Verfahren nach Anspruch 3, **dadurch gekennzeichnet, dass** die Bestimmung eines ionosphärischen Modells ausgehend von der Schätzung der freien Elektronenverteilung in der Ionosphärenschicht ($C_{ION}$) erhalten wird, dass diese Schätzung angenähert durchgeführt wird, indem die ionosphärische Schicht ($C_{ION}$) in ein Gitter von Volumenauflösungseinheiten ($Vox_{ijk}$), "Voxel" genannt, zerlegt wird, die von der Funkstrahlung der Signale beleuchtet werden, die sich in der ionosphärischen Schicht ($C_{ION}$) ausbreiten, in denen die ionosphärische Verteilung der Elektronendichte zu einem bestimmten Zeitpunkt als konstant angenommen wird, und dass die Bestimmung durch Echtzeitauflösung der mittleren Dichte von Elektronen in jeder der Volumeneinheiten ($Vox_{ijk}$) erhalten wird, die von der Funkstrahlung beleuchtet werden, indem ein so genanntes Kalman-Filter verwendet wird.

5. Verfahren nach Anspruch 4, **dadurch gekennzeichnet, dass** es einen zusätzlichen Schritt enthält, der darin besteht, dem ionosphärischen Modell zugeordnete Daten mit gleichzeitig berechneten geodätischen Daten zu kombinieren, und dass die geodätischen Daten durch eine einzige der ortsfesten Bezugs-Bodenstationen ($REF_M$-$REF_{ME}$), Master-Station genannt, berechnet und an die Vielzahl von ortsfesten Bezugs-Bodenstationen (REF) verteilt werden.

6. Verfahren nach Anspruch 1, **dadurch gekennzeichnet, dass** es einen zusätzlichen Schritt enthält, der darin besteht, drei Pseudo-Entfernungscodes, die den drei Trägern zugeordnet sind, im ersten Schritt der Bestimmung der so genannten "Extralangweg"-Phasendifferenz-Mehrdeutigkeit zwischen dem dritten und dem zweiten Träger zu verwenden.

7. Verfahren nach Anspruch 2, **dadurch gekennzeichnet, dass** es einen zusätzlichen Schritt enthält, der darin besteht, einen Integritätsversuch unter Verwendung von "Langweg"-Pseudo-Entfernungscodes und der zweiten Frequenz durchzuführen, um einem Fehler in der Mehrdeutigkeitsauflösung der ersten Frequenz zugeordnete Sprünge zu erfassen.

8. Satelliten-Navigationssystem zur Durchführung des Verfahrens nach einem der vorhergehenden Ansprüche, **dadurch gekennzeichnet, dass** es eine Vielzahl von um den Erdball (GT) drehenden Satelliten ($SAT_1$-$GPS_{E1}$ bis $SAT_n$-$GPS_{En}$), wobei jeder der Satelliten die Signale mit drei Trägern unterschiedlicher Frequenzen sendet, mindestens einen Nomaden (SUR), der einen Empfänger ($SUR_{GPS}$) der Signale und integrierte Recheneinrichtungen enthält, die die ersten bis dritten Schritte durchführen und die ionosphärischen Korrekturen integrieren, die von einem ionosphärischen Beschreibungsmodell eines Bereichs der Ionosphäre stammen, der von der Funkstrahlung der von der Vielzahl von Satelliten ($SAT_1$-$GPS_{E1}$ bis $SAT_n$-$GPS_{En}$) gesendeten Signale durchquert wird, eine Vielzahl von ortsfesten Bezugs-Bodenstationen (REF), die je einen Empfänger ($REF_{GPS}$) enthalten, der die von den Satelliten gesendeten Signale empfängt, integrierte Recheneinrichtungen zur Bestimmung des ionosphärischen Beschreibungsmodells der ionosphärischen Schicht ($C_{ION}$), und einen Sender ($REF_E$) enthält, um Daten, die dem ionosphärischen Modell entsprechen, an den Empfänger ($SUR_{GPS}$) eines Nomaden (SUR) zu übertragen, und dass mindestens eine der ortsfesten Bezugs-Bodenstationen ($REF_M$), Master genannt, einen Empfänger ($REFM_{GPS}$) der von der Vielzahl von Satelliten ($SAT_1$-$GPS_{E1}$ bis $SAT_n$-$GPS_{En}$) gesendeten Signale, Recheneinrichtungen von geodätischen Daten und einen Sender ($REF_{ME}$) enthält, um sie an die Vielzahl von ortsfesten Bezugs-Bodenstationen (REF) zu verteilen.

9. System nach Anspruch 8, **dadurch gekennzeichnet, dass** der Nomade (SUR) sich in einer Entfernung von mehr als 100 km von der nächstliegenden ortsfesten Bezugs-Bodenstation (REF) befindet.

**Claims**

1. Method for real time navigation using three-carrier radio signals with discrete first, second and third frequencies, having increasing values ranging from said first to said third frequency, for determining the position of a user, referred to as a nomad (*SUR*), said radio signals being transmitted by a determined number of transmitters installed on-board satellites (*SAT*) orbiting the terrestrial globe and in line of sight with said nomad, said signals being received by a receiver associated with said nomad, and a receiver associated with at least one earth station among a plurality of fixed earth stations, referred to as reference stations (*REF*), said radio signals passing through a layer of the atmosphere, referred to as the ionospheric layer ($C_{ION}$). surrounding said terrestrial globe and undergoing disturbances there causing phase ambiguities of said carriers, this method including at least the following steps:

   - a first step consisting in the determination, in said nomad (*SUR*), of the phase difference ambiguity between said third and second carriers, referred to as the "extra-long path", on the basis of a combination of pseudo-distances using a unique code value;
   - a second step consisting in the estimation, in said nomad (*SUR*), of the phase difference ambiguity between said first and second carriers, referred to as the "long path", on the basis of said "extra-long path" ambiguity determined during said first step;
   - a third step consisting, in said nomad (*SUR*), in the resolution of the ambiguity of one of said frequencies on the basis of said "long path" ambiguity estimated during said second step;
   this method being **characterised in that** it includes:

   an additional step consisting in the application of ionospheric corrections in real time during said third step, said ionospheric corrections being based on a constantly updated real-time ionospheric model of said ionospheric layer ($C_{ION}$).

2. Method according to Claim 1, **characterized in that**, during said third step, said ambiguity resolution is performed on said second carrier frequency.

3. Method according to any one of Claims 1 or 2, **characterized in that** said model is an ionospheric model describing said ionospheric layer, determined by at least one of said reference earth stations (*REF*) receiving signals transmitted by a predetermined number of said satellites ($SAT_1$-$GPS_{E1}$ to $SAT_n$-$GPS_{En}$) orbiting the terrestrial globe *(GT)* and in line of sight with the latter, said signals including at least two carriers with discrete frequencies, and **in that** said model is determined on the basis of phase data of said transmitted signals, and **in that** it includes a step of transmitting data corresponding to said ionospheric model.

4. Method according to Claim 3, **characterized in that** said ionospheric model determination is obtained on the basis of the estimation of the distribution of free electrons in said ionospheric layer ($C_{ION}$), **in that** said estimation is carried out in an approximate manner by breaking down the ionospheric layer ($C_{ION}$) into a grid of volume resolution elements ($Vox_{ijk}$), referred to as "voxels", illuminated by the radio-frequency radiation of said signals propagating in said ionospheric layer ($C_{ION}$), in which the ionospheric electron density distribution is assumed to be constant at a given time, and **in that** said determination is obtained through resolution in real time of the mean density of electrons in each of said volume elements ($V_{OXijk}$) illuminated by said radio frequency radiation by making use of a Kalman filter.

5. Method according to Claim 4, **characterized in that** it includes an additional step consisting of combining data associated with said ionospheric model with simultaneously calculated geodetic data, and **in that** said geodetic data are calculated by only one of said fixed reference earth stations ($REF_M$-$REF_{ME}$), referred to as the master station, and distributed to said plurality of fixed reference earth stations *(REF)*.

6. Method according to Claim 1, **characterized in that** includes an additional step consisting of using three pseudo-distance codes, associated with said three carriers, during said first step of determining the phase difference ambiguity between said third and second carriers, referred to as the "extra-long path".

7. Method according to Claim 2, **characterized in that** includes an additional step consisting of carrying out an integrity test by using "wide path" pseudo-distance codes and said second frequency to detect jumps associated with an error in said ambiguity resolution of said first frequency.

8. Satellite navigation system for carrying out the method according to any one of the preceding claims, **characterized in that** it includes a plurality of satellites ($SAT_1$-$GPS_{E1}$ to $SAT_n$-$GPS_{En}$) orbiting the terrestrial globe *(GT),* each of the satellites transmitting said three-carrier signals with discrete frequencies, at least one nomad ($SUR$) including a receiver ($SUR_{GPS}$) of said signals and integrated calculation means carrying out said first to third steps and integrating said ionospheric corrections originating from an ionospheric model describing a region of the ionosphere passed through by the radio-frequency radiation of said signals transmitted by said plurality of satellites ($SAT_1$-$GPS_{E1}$ to $SAT_n$-$GPS_{En}$), a plurality of fixed earth stations referred to as reference stations ($REF$), each including a receiver ($REF_{GPS}$) receiving said signals transmitted by said satellites, integrated calculation means for determining said ionospheric model describing the ionospheric layer ($C_{ION}$), and a transmitter ($REF_E$) for transmitting data corresponding to said ionospheric model of said receiver ($SUR_{GPS}$) of the nomad ($SUR$), and **in that** at least one of said fixed reference earth stations ($REF_M$), referred to as the master station, includes a receiver ($REFM_{GPS}$) of said signals transmitted by said plurality of satellites ($SAT_1$-$GPS_{E1}$ to $SAT_n$-$GPS_{En}$), means for calculating geodetic data and a transmitter ($REF_{ME}$) for distributing them to said plurality of fixed reference earth stations ($REF$).

9. System according to Claim 8, **characterized in that** said nomad ($SUR$) is located at a distance of more than 100 km from the nearest fixed reference earth station *(REF)*.

FIG.1A

FIG.1B

FIG.2

FIG.3

## FIG.4

$V_v$ = Modèle tomographique
en temps réel

$T_m$ = Valeurs vraies

Retard (en secondes)

## FIG.5

$V_v$ = Modèle tomographique
en temps réel

$T_m$ = Valeurs vraies

Retard (en secondes)

# FIG.6

# FIG.7A

# FIG.7B

# FIG.7C

# FIG.7D

FIG.8A

FIG.8B

FIG.8C

FIG.8D

FIG.9

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **U. VOLLATH et al.** ANALYSIS OF THREE-CARRIER AMBIGUITY RESOLUTION (TCAR) TECHNIQUE FOR PRECISE RELATIVE POSITIONNING IN GNSS-2. *Proceedings of the ION-GPS,* 1998, 1-6
- **JAEWO JUNG et al.** Optimization of Cascade Integer Resolutionwith three Civil GPS Frequencies. *Procedings of the ION-GPS,* 2000
- **VOLLATH et al.** Ambiguity Resolution using Three Carriers - Performance Analysing using "Real" Data. *GNSS Symposium,* Mai 2001
- **HERNÁNDEZ-PAJARES et al.** Tomographic modeling of GNSS ionospheric corrections : Assesment and real-time applications. *ION GPS,* 19 Septembre 2000, 616-625

- Factorization Methods for Discrete Sequential Estimation. **G.J. BIERMAN.** Mathematics in Science and Engineering. Academic Press, 1977, vol. 128
- **HERNÁNDEZ-PAJARES et al.** Tomographic modeling of GNSS ionospheric corrections: Assessment and real-time applications. *ION GPS'2001,* Septembre 2001
- **HERNÁNDEZ-PAJARES et al.** Improving the real-time ionosphéric détermination from GPS sites at Very Long Distances over the Equator. *Journal of Geophysical Research,* 2002